(19) Europäisches Patentamt
European Patent Office
Office européen des brevets

(11) EP 4 418 758 A2

(12) EUROPEAN PATENT APPLICATION

(43) Date of publication:
**21.08.2024 Bulletin 2024/34**

(21) Application number: **24154076.4**

(22) Date of filing: **26.01.2024**

(51) International Patent Classification (IPC):
***H04W 52/24*** *(2009.01)* *H04W 52/08* *(2009.01)*
*H04W 52/10* *(2009.01)* *H04W 52/14* *(2009.01)*
*H04W 52/02* *(2009.01)*

(52) Cooperative Patent Classification (CPC):
**H04W 52/242;** H04W 52/0206; H04W 52/08;
H04W 52/10; H04W 52/146

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 US 202363446358 P**

(71) Applicant: **Industrial Technology Research Institute**
**Chutung, Hsinchu 310401 (TW)**

(72) Inventors:
- **Lo, Li-Chung**
  **407 Taichung City (TW)**
- **Lee, Chien-Min**
  **324 Taoyuan City (TW)**
- **Hsieh, Chia-Wen**
  **600 Chiayi City (TW)**

(74) Representative: **Kurig, Thomas**
**Becker Kurig & Partner**
**Patentanwälte mbB**
**Bavariastraße 7**
**80336 München (DE)**

# (54) METHOD OF POWER CONTROL FOR WIRELESS COMMUNICATION, AND COMMUNICATION DEVICE AND NETWORK ELEMENT USING THE SAME

(57) A method of power control for wireless communication, a communication device, and a network element are provided. The method includes: determining an uplink transmission power for a cell in a first transmission occasion according to a parameter set, wherein the parameter set comprises a first nominal power, a downlink pathloss estimate, and a first power control adjustment.

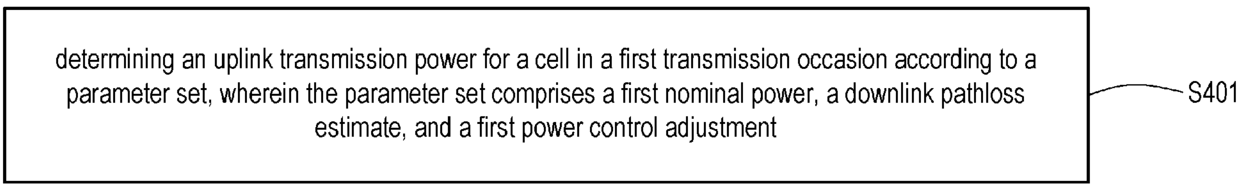


FIG. 40

EP 4 418 758 A2

## Description

## BACKGROUND

Technical Field

The disclosure is related to a method of power control for wireless communication, and a communication device and a network element using the same.

Description of Related Art

A network element may switch between an energy saving mode and a normal power mode based on, for example, the traffic load of the network. FIG. 1 illustrates a schematic diagram of incorrect transmission power derivation. If a base station (BS) 10 switches from the normal power mode to the energy saving (ES) mode, the adaptation of antenna number and/or transmission power of the BS 10 may be changed, and the beam coverage and/or transmission (Tx)/receiving (Rx) beam pattern of the BS 10 may be changed (e.g., beam coverage may be reduced) accordingly. Since power control (PC) parameters related to the uplink (UL) transmission may not be adapted correspondingly, it may lead to issues such as poor communication quality or wastage of power in user equipment (UE) 20. Therefore, mechanisms to handle incorrect transmission power derivation issues for various ES schemes are required.

## SUMMARY

The disclosure is directed to a method of power control for wireless communication, and a communication device and a network element using the same.

In one embodiment of the present disclosure, a method of power control for wireless communication, adapted to a communication device, comprising: determining an uplink transmission power for a cell in a first transmission occasion according to a parameter set, wherein the parameter set comprises a first nominal power, a downlink pathloss estimate, and a first power control adjustment.

In one embodiment of the present disclosure, a method of power control for wireless communication, adapted to a network element, comprising: transmitting a first configuration of a parameter set for a cell, wherein the parameter set comprises a first nominal power and a downlink pathloss estimate.

In one embodiment of the present disclosure, a communication device comprising a processor and a transceiver. The processor is coupled to the transceiver, wherein the processor is configured to: determine an uplink transmission for a cell in a first transmission occasion according to a parameter set, wherein the parameter set comprises a first nominal power, a downlink pathloss estimate, and a first power control adjustment.

In one embodiment of the present disclosure, a network element comprising a processor and a transceiver. The processor is coupled to the transceiver, wherein the processor is configured to: transmit a first configuration of a parameter set for a cell, wherein the parameter set comprises a first nominal power.

To make the aforementioned more comprehensible, several embodiments accompanied with drawings are described in detail as follows.

BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1 illustrates a schematic diagram of incorrect transmission power derivation.
FIG. 2 illustrates a schematic diagram of coverages of BS.
FIG. 3 illustrates a schematic diagram of beamforming in 3GPP 5G NR.
FIG. 4 illustrates a schematic diagram of the power consumption of a transceiver unit (TXRU) of a BS.
FIG. 5 illustrates a schematic diagram of a network element for energy saving according to an embodiment of the present disclosure.
FIG. 6 illustrates a schematic diagram of target received power at BS side according to an embodiment of the present disclosure.
FIG. 7 illustrates a schematic diagram of DL path loss estimation according to an embodiment of the present disclosure.
FIG. 8 illustrates a schematic diagram of L3-RSRP calculation according to an embodiment of the present disclosure.

FIG. 9 illustrates a schematic diagram of accumulated TPC f(i) according to an embodiment of the present disclosure.

FIG. 10 illustrates a schematic diagram of accumulated TPC f(i) and time windows according to an embodiment of the present disclosure.

FIG. 11 illustrates a schematic diagram of power domain energy saving according an embodiment of the present disclosure.

FIG. 12 illustrates a schematic diagram of spatial domain energy saving according to an embodiment of the present disclosure.

FIG. 13 illustrates a schematic diagram of combination of power domain energy saving and spatial domain energy saving according to an embodiment of the present disclosure.

FIG. 14-15 illustrate schematic diagrams of issues of DL pathloss estimation according to an embodiment of the present disclosure.

FIG. 16 illustrates a schematic diagram of issue of insufficient target received power at BS side according to an embodiment of the present disclosure.

FIG. 17 illustrates a schematic diagram of issue of TPC command accumulation according to an embodiment of the present disclosure.

FIG. 18 illustrates a schematic diagram of beam patterns of BS in different power modes according to an embodiment of the present disclosure.

FIG. 19 illustrates a schematic diagram of power mode changing according to an embodiment of the present disclosure.

FIG. 20 illustrates a schematic diagram of transmission power of power mode according to an embodiment of the present disclosure.

FIG. 21 and FIG. 22 illustrate schematic diagrams of calculation of DL pathloss estimate according to an embodiment of the present disclosure.

FIG. 23 illustrates a schematic diagram of transmission power of power mode according to an embodiment of the present disclosure.

FIG. 24 illustrates a schematic diagram of compensate power offset in L1-RSRP in ES mode according to an embodiment of the present disclosure.

FIG. 25 illustrates a schematic diagram of beam pattern of power mode according to an embodiment of the present disclosure.

FIG. 26 and FIG. 27 illustrate schematic diagrams of transmission power for ES mode according to an embodiment of the present disclosure.

FIG. 28 illustrates a flowchart of determining a measurement object for the LTE according to an embodiment of the present disclosure

FIG. 29 illustrates a schematic diagram of power mode changing according to an embodiment of the present disclosure.

FIG. 30 illustrates a schematic diagram of resetting of L3-RSRP filter according to an embodiment of the present disclosure.

FIG. 31 illustrates a schematic diagram of resetting of L3-RSRP filter according to an embodiment of the present disclosure.

FIG. 32 illustrates a schematic diagram of explicit ES-mode specific offset power according to an embodiment of the present disclosure.

FIG. 33 illustrates a schematic diagram of explicit ES-mode specific parameter $\alpha$ according to an embodiment of the present disclosure.

FIG. 34 illustrates a schematic diagram of implicit ES-mode specific offset power according to an embodiment of the present disclosure.

FIG. 35 illustrates a schematic diagram of ES-mode specific TPC command accumulation with a timer according to an embodiment of the present disclosure.

FIG. 36 illustrates a schematic diagram of resetting of TPC command accumulation based on a timer according to an embodiment of the present disclosure.

FIG. 37 illustrates a schematic diagram of resetting of TPC command accumulation based on a timer according to an embodiment of the present disclosure.

FIG. 38 illustrates a schematic diagram of communication device according to an embodiment of the present disclosure.

FIG. 39 illustrates a schematic diagram of network element 390 according to an embodiment of the present disclosure.

FIG. 40 illustrates a flowchart of a method of power control for wireless communication according to an embodiment of the present disclosure.

FIG. 41 illustrates a flowchart of a method of power control for wireless communication according to an embodiment of the present disclosure.

## DESCRIPTION OF THE EMBODIMENTS

The acronyms in the present disclosure are defined as follows:

| **Acronym** | **Full Name** |
|---|---|
| CC | component carrier |
| CS | Configured Scheduling |
| CSI | Channel state information |
| CSI-RS | Channel state information reference signal |
| CORESET | Control Resource Set |
| DCI | downlink control information |
| DL | downlink |
| EIRP | equivalent isotropically radiated power |
| ES | energy saving |
| EPRE | Energy Per Resource Element |
| gNodeB (gNB) | next Generation Node B |
| ID | identity |
| L1 | layer 1 |
| L3 | layer 3 |
| MAC | medium access control |
| MAC CE | MAC control element |
| MCS | modulation coding scheme |
| MSG | message |
| NR | new radio |
| NW | network |
| PL-RS | Pathloss reference signal |
| PDCCH | Physical downlink control channel |
| PDSCH | Physical downlink shared channel |
| PUCCH | physical uplink control channel |
| PUSCH | physical uplink share channel |
| PRACH | physical random access channel |
| QCLed | quasi co-located |
| RE | resource element |
| RRC | radio resource control |
| RS | reference signal |
| RSRP | Reference signal receiving power |
| Rx beam | receiving beam |
| SRI | SRS resource indicator |
| SRS | sound reference signal |
| TPC | Transmission power control |
| TRP | transmission reception point |
| Tx beam | transmitted beam |
| TXRU | transceiver unit |
| UE | user equipment |
| UL | uplink |
| WID | working item description |

The following embodiments provide a power control method for UL transmission between a network element and a communication device. However, it should be noted that the method of the present disclosure may also be applied in a downlink (DL) transmission. In the case of DL transmission, the functions or steps executed by the network element in the following embodiments may be executed by the communication device, and vice versa - the functions or steps executed by the communication device in the following embodiments may be executed by the network element. For example, the PDCCH/PDSCH transmission for UL transmission in the following embodiments may be replaced by the PUCCH/PUSCH transmission for DL transmission. In the following embodiments, the communication device may be represented by UE and the network element may be represented by BS, but not limited herein.

FIG. 2 illustrates a schematic diagram of coverages of BS 10. Due to limited spectrum resource below 6GHz, the 5G new radio (NR) may extend operation frequency to above 6GHz for better transmission efficiency. However, path loss may be believed to be much more severe in propagation at mmWave frequencies due to insufficient coverage. For example, the coverage of BS 10 in the above-6GHz spectrum may be smaller than the coverage of BS 10 in the sub-6GHz spectrum. In order to achieve sufficient coverage for wireless communication in the above-6GHz spectrum, the number of deployed BS 10 needs to be increased, and the cost for base station deployment will also increase.

FIG. 3 illustrates a schematic diagram of beamforming in 3GPP 5G NR. The BS 10 may generate beamformed signal by multiple antennas. The BS 10 may perform beamforming at high operation frequency for signal coverage enhancement, and the BS may perform beamforming at low operation frequency for signal reception enhancement.

FIG. 4 illustrates a schematic diagram of the power consumption of a transceiver unit (TXRU) of a BS. A BS may activate one or more TXRU 40 (i.e., active antenna unit (AAU)) for operations such as analog-to-digital conversion (ADC), digital-to-analog conversion (DAC), up frequency conversion, or down frequency conversion, but the present disclosure is not limited herein.

FIG. 5 illustrates a schematic diagram of a network element for energy saving according to an embodiment of the present disclosure. The network element in the present disclosure may refer to the BS 10, a network (NW), a transmission reception point (TRP), a smart repeater, a remote radio head (RRH), a reconfigurable intelligent surface (RIS), wherein RRH/RIS/Repeater may assist BS/TRP for robust coverage. The network element may perform energy saving based on, for example, low traffic load.

Regarding per-cell UL power control, a UL transmission power $P(q_{PL}, i,j)$ with index j (e.g., index of transmission occasion) and i (index of cell) may be derived by equation (1), wherein $P_{CMAX,C}$ is a configured maximum allowed transmission power for cell C, $P_0(j)$ is a target received power at BS (e.g., gNB) side, $\alpha$ is a fractional power control factor, $PL(q_{PL})$ is a DL pathloss estimate calculated by the UE using PL-RS resource index (e.g., $q_{PL}$), f(i) is a transmission power control (TPC) command, $M_{RB}(i)$ is the number of allocated resource blocks, and $\Delta_{TF}(i)$ is a MCS related power adjustment (the more bits per resource element, the higher value of $\Delta_{TF}(i)$). ($P_0(j) + \alpha \cdot PL(q_{PL})$) may be regarded as parameter for open-loop power control, and ($10 \log_{10}\{2^{\mu}M_{RB}(i)\} + \Delta_{TF}(i) + f(i)$) may be regarded as parameter for closed-loop power control.

$$P(q_{PL}, i, j) = \min\begin{cases} P_{CMAX,C} \\ P_0(j) + \alpha \cdot PL(q_{PL}) + 10\log_{10}\{2^{\mu}M_{RB}(i)\} + \Delta_{TF}(i) + f(i) \end{cases} \text{[dBm]} \quad \ldots(1)$$

The target received power $P_0(j)$ (i.e., nominal power) for channel/RS demodulation at BS 10 (e.g., gNB) side may be derived by equation (2), wherein $P_{0_Nominal,j}$ is a target received power at BS 10 side based on, for example, a synchronization signal block (SSB), and $P_{0_UE,j}$ is an offset adjustment (or an offset power) according to CSI-RS quasi co-located with the SSB, as shown in FIG. 6. It should be noted that $P_{0_UE}$ (which is $P_{0_UE,j}$ for UE j) may be inversely proportional to Rx antenna gain ($AG_{RX}$) of CSI-RS.

$$P_0(j) = P_{0_Nominal,j} + P_{0_UE,j} \quad \ldots(2)$$

FIG. 7 illustrates a schematic diagram 70 of DL path loss estimation according to an embodiment of the present disclosure. DL pathloss estimate $PL(q_{PL})$ calculated by the UE using PL-RS resource index (e.g., $q_{PL}$) may be derived by equation (3), wherein $P_{Tx}(q_{PL})$ is an average EPRE of the resource elements that the network used for PL-RS transmission (i.e., $P_{Tx}(q_{PL})$ is the transmission power of the PL-RS $q_{PL}$) and $RSRP_{L3}(q_{PL})$ is a L3-RSRP for PL-RS at UE side.

$$PL(q_{PL}) = P_{Tx}(q_{PL}) - RSRP_{L3}(q_{PL}) \quad \ldots(3)$$

The first measurement result of L3-RSRP may be represented as equation (4-1), wherein $RSRP_{L3,1}(q_{PL})$ is the first measurement result of L3-RSRP of PL-RS $q_{PL}$ and $RSRP_{L1,1}(q_{PL})$ is the first measurement result of L1-RSRP of PL-RS $q_{PL}$. The nth (n> 1) measurement result of L3-RSRP may be represented as equation (4-2), wherein "a" is a filter coefficient ($0 < a \le 1$), $RSRP_{L3,n-1}(q_{PL})$ is the (n-1)th measurement result of L3-RSRP of PL-RS $q_{PL}$ , and $RSRP_{L1,n}(q_{PL})$ is the nth measurement result of L1-RSRP of PL-RS $q_{PL}$. For example, FIG. 8 shows a schematic diagram 80 of calculation of L3-RSRP (and L1-RSRP) for the first four measurement result.

$$RSRP_{L3,1}(q_{PL}) = RSRP_{L1,1}(q_{PL}) \quad \ldots(4\text{-}1)$$

$$RSRP_{L3,n}(q_{PL}) = (1 - \mathrm{a}) \cdot RSRP_{L3,n-1}(q_{PL}) + \mathrm{a} \cdot RSRP_{L1,n}(q_{PL}) \quad \ldots(4\text{-}2)$$

An accumulated TPC f(i) (i.e., power control adjustment) at transmission occasion i may be represented as equation (5), wherein f(i-1) is the accumulated TPC at transmission occasion (i-1), M is the number of received TPC command value during a time period between the UL transmission occasion (i-1) and UL transmission occasion i, and $\delta(m)$ is the mth TPC command value. FIG. 9 illustrates a schematic diagram 90 of accumulated TPC f(i) according to an embodiment of the present disclosure, wherein M is assumed to be 3.

$$f(i) = f(i-1) + \sum_{m=0}^{M-1} \delta(m) \qquad \ldots(5)$$

FIG. 10 illustrates a schematic diagram 100 of accumulated TPC f(i) and time windows according to an embodiment of the present disclosure. In one embodiment, M in the equation (5) may be defined as the number of received TPC command value during a window, wherein the window for calculating f(i) may be K(i-1) symbols of occasion (i-1) (i.e., time period between DCI#1 and PUSCH#1 of occasion (i-1)), and the window for calculating f(i+1) may be K(i) symbols of occasion i (i.e., time period between DCI#2 and PUSCH#2 of occasion i). Each of TPC command value may be indicated by a DCI (e.g., DCI for UL transmission). For example, $\delta(0)$, $\delta(1)$, or $\delta(2)$ may be indicated by the DCI#1.

FIG. 11 illustrates a schematic diagram of power domain energy saving (e.g., adaptation of transmission power) according an embodiment of the present disclosure. The BS 10 may reduce power for transmission of, for example, CSI-RS or PDSCH for energy saving purposes. For example, the pattern of CSI-RS#1 for DL transmission may change after the BS 10 reduces the normal CSI-RS Tx power from P1 to P2. For another example, the pattern of CSI-RS#1 for LTL transmission may change after the BS reduces the received CSI-RS Rx power from P1" to P2". The UE may receive a configuration of a list of sub configurations (also referred to as second configuration), wherein each of sub configuration of the list of sub configurations may be associated with a power offset for receiving a reference signal (e.g., SSB#A or CSI-RS#1 in the NP mode, or SSB#A' or CSI-RS#1' in the ES mode). In order to communicate with the BS, the UE may apply the power offset corresponding to the NP mode if the BS 10 is in the NP mode, and the UE may apply the power offset corresponding to the ES mode if the BS 10 is in the ES mode.

FIG. 12 illustrates a schematic diagram of spatial domain energy saving (e.g., adaptation of TXRU number) according to an embodiment of the present disclosure. In one example, assume that the BS 10 may have a plurality of TXRUs such as TXRU1~TXRU4 and TXRU1~TXRU4 are turned on for transmission of SSB#A (or CSI-RS#1) if the BS 10 is in the normal power mode (also referred to as second mode). If the BS 10 switch from the normal power mode to the spatial domain ES mode, the BS 10 may turn off some of the TXRUs such as TXRU2 and TXRU3. Accordingly, the beam pattern of SSB#A' (or CSI-RS#1') of BS 10 in the ES mode may be different from the beam pattern of SSB#A (or CSI-RS#1) of BS 10 in the normal power mode, even if the configuration of SSB#A' (or CSI-RS#1') may be the same as the configuration of SSB#A (or CSI-RS#1). The UE may receive a configuration of a list of sub configurations, wherein each of sub configuration of the list of sub configurations may be associated with an antenna port subset for receiving a reference signal (e.g., SSB#A or CSI-RS#1 in the NP mode, or SSB#A' or CSI-RS#1' in the ES mode). In order to communicate with the BS, the UE may apply the antenna port subset corresponding to the NP mode if the BS 10 is in the NP mode, and the UE may apply the antenna port subset corresponding to the ES mode if the BS 10 is in the ES mode.

FIG. 13 illustrates a schematic diagram of combination of power domain energy saving and spatial domain energy saving according to an embodiment of the present disclosure. When the BS 10 switches from the normal power mode to the ES mode, the BS 10 may turn off one or more TXRUs, antenna elements, and/or CSI-RS resources for energy saving purposes. For example, the BS 10 may turn off CSI-RS#A1, CSI-RS#A2, CSI-RS#A3, CSI-RS#A4, and CSI-RS#A5 after the BS 10 switching from the normal power mode to the ES mode.

FIG. 14-15 illustrate schematic diagrams of issues of DL pathloss estimation according to an embodiment of the present disclosure. When the BS 10 turns into ES mode or turns back to the normal power (NP) mode, the UE may derive an incorrect pathloss power estimation based on the PL-RS measurement results before and after the mode changing. Referring to FIG. 14, for spatial domain ES (e.g., adaptation of TXRU number), PL-RS measurement results may be impacted by, for example, the effect of path loss or low mobility. For example, assume the UE measures a L3-RSRP $RSRP_{L3,n0}$ in occasion $n_0$ when the BS 10 is in NP mode. If the BS 10 switches from the NP mode to the ES mode by turning off one or more TXRUs, the UE may measure a L1-RSRP in occasion $n_1$ $RSRP_{L1,n1}$ when the BS 10 is in ES mode. The UE may derive an incorrect pathloss power based on $RSRP_{L3,n1} = (1 - a) \cdot RSRP_{L3,n0} + a \cdot RSRP_{L1,n1}$ since $RSRP_{L3,n0}$ and $RSRP_{L1,n1}$ belong to different power mode respectively.

Referring to FIG. 15, for power domain ES (e.g., reduced transmission power), PL-RS measurement results may be impacted by, for example, the effect of path loss or low mobility. For example, assume the UE measures a L3-RSRP $RSRP_{L3,n0}$ in occasion $n_0$ when the BS 10 is in NP mode. If the BS 10 switches from the NP mode to the ES mode by performing power reduction, the UE may measure a L1-RSRP in occasion $n_1$ $RSRP_{L1,n1}$ when the BS 10 is in ES mode. The LTE may derive an incorrect DL pathloss estimate $PL(q_{PL})$ based on $RSRP_{L3,n1} = (1 - a) \cdot RSRP_{L3,n0} + a \cdot RSRP_{L1,n1}$ since $RSRP_{L3,n0}$ and $RSRP_{L1,n1}$ belong to different power mode respectively. Furthermore, the LTE may derive the incorrect pathloss power $PL(q_{PL}) = P_{Tx,NP}(q_{PL}) - RSRP_{L3,n1}$ based on average EPRE $P_{Tx,NP}(q_{PL})$ of the REs that the BS 10 used for PL-RS transmission in NP mode since the average EPRE $P_{Tx,NP}(q_{PL})$ corresponds to the NP mode but not to the ES mode. When the BS 10 is in the ES mode, the UE should derive the DL path loss estimate $PL(q_{PL})$ based on average EPRE $P_{Tx,ES}(q_{PL})$ of the REs that the BS10 used for PL-RS transmission in ES mode.

FIG. 16 illustrates a schematic diagram of issue of insufficient target received power $P_0$ at BS 10 side according to an embodiment of the present disclosure. When the BS 10 turns into ES mode or turns back to normal power mode, if UE uses the same value of $P_0$ before and after the mode changing, the measurement object of the UE may be changed from a reference signal (e.g., PL-RS) to another reference signal (e.g., reference signal with different transmission power or different ID), and the result of UL transmission power derivation may be incorrect. For example, if the BS 10 switches from the normal power mode to the spatial ES mode, the target received power $P_0$ at BS 10 side may be insufficient due to insufficient UL transmission power $P_{0_UE}$ (i.e., offset adjustment according to CSI-RS QCLed with the SSB) of LTE 20.

FIG. 17 illustrates a schematic diagram of issue of TPC command accumulation according to an embodiment of the present disclosure. Different modes may introduce different channel properties. If the UE accumulate TPC command before and after the mode changing in the conventional way, the UE may derivate an incorrect UL transmission power. For example, assume the BS switches from the normal power mode to the energy saving mode (also referred to as first mode) at time point $T_1$, wherein the LTE receive a TPC command value $\delta(0)$ in occasion (i-1) before $T_1$ and receive another TPC command value $\delta(1)$ in occasion i after $T_1$. If the UE accumulate the TPC command f(i) based on the equation 17, the UE may derivate an incorrect UL transmission power since $f(i - 1) + \delta(0)$ and $\delta(1)$ belong to different power modes respectively.

FIG. 18 illustrates a schematic diagram of beam patterns of BS 10 in different power modes according to an embodiment of the present disclosure. The UL transmission related PC parameters under different power modes are shown in Table 1.

Table 1

| Mode | Normal power | Power domain ES | Spatial domain ES |
|---|---|---|---|
| $q_{PL}$ | PL-RS ID#1 (e.g., CSI-RS #1) | PL-RS ID#1 (e.g., CSI-RS#1) | *PL-RS ID#2 (e.g., CSI-RS#1') |
| $P_{Tx}(q_{PL})$ (dBm) | Power = e.g., 30 | *Power = e.g., 27 | *Power = e.g., 30 |
| L3 filter | $RSRP_{L3}$ | $*RSRP'_{L3}$ | $*RSRP''_{L3}$ |
| $P_{0_UE}$ | $P_{0_UE}$ | $P_{0_UE}$ | $*P'_{0_UE}$ |
| TPC command | f(i) | *f'(i) | *f"(i) |
| *: UL PC parameters may need to be adjusted if UE receives a signaling for mode changing from a NP mode to an ES mode. | | | |

Currently, the UL power control may not be associated with network energy saving methods. If a BS 10 switches to the ES mode (e.g., adaptation of TXRU number and/or transmission power), the UL transmission related PC parameters may not be adapted correspondingly. Thus, the UE may derivate an incorrect UL Tx power. For example, when the BS 100 switches from the normal power mode to an energy saving mode, the beam coverage of the BS 10 may be reduced and/or the Tx/Rx beam pattern of the BS 10 may be changed. Since L3-RSRP filter and UL Tx power transmission derivation of the UE 20 may not be adapted correspondingly, improper UL power which may reduce the communication quality or increase the power consumption may be applied by the UE 20, as shown in FIG. 19.

In one embodiment, a UE may determine an UL transmission power for a cell in a transmission occasion according to a parameter set, wherein the parameter set may include a nominal power $P_0(j)$, a DL pathloss estimate $PL(q_{PL})$, and a power control adjustment f(i). The UE may receive a configuration of a parameter set for a cell and may obtain the nominal power $P_0(j)$ and confirmation of RS for calculating the DL pathloss estimate $PL(q_{PL})$ from the BS.

In one embodiment, after the UE received a signaling for power mode changing, the UE may calculate the DL pathloss estimate $PL(q_{PL})$ according to an explicit ES-mode specific Tx power of a PL-RS. FIG. 20 illustrates a schematic diagram of transmission power of power mode according to an embodiment of the present disclosure. For PUCCH or PUSCH resource indicated by SRI, the UE may be configured with a RS power for the normal power mode and one or more RS powers for the energy saving mode. For example, for a measurement object $q_{PL}$ (i.e., PL-RS $q_{PL}$) corresponding to PL-RS ID#0 (e.g., ID corresponding to CSI-RS#1), the UE may be configured with RS power #0 for the NP mode and may be configured with RS power #1 (or RS power_ES) for the ES mode, wherein RS power #1 (or RS power_ES) may be less than RS power #0.

In one embodiment, if the UE receives an indicator for power mode changing, the UE may reset L3-RSRP filter.

A UE may be configured with a PL-RS (e.g., with a first PL-RS ID) included in a configuration of pathloss estimate by receiving the configuration of pathloss estimate, wherein the PL-RS may be configured with one or more transmission powers such as a first transmission power corresponding to the PL-RS of the NP mode and/or a second transmission power corresponding to the PL-RS of the ES mode. After the UE received a signaling (or an indicator) for power mode (e.g., NP mode or ES mode) changing, the UE may apply the corresponding transmission power (e.g., first transmission power or second transmission power) for the PL-RS. That is, the UE may calculate the DL pathloss estimate $PL(q_{PL})$ according to the transmission power of the PL-RS according to the configuration of pathloss estimate. For example, if the UE receives a signaling for changing to NP mode, the UE may calculate the DL pathloss estimate $PL(q_{PL})$ according to the first transmission power. If the UE receives signaling for changing to ES mode, the LTE may calculate the DL pathloss estimate $PL(q_{PL})$ according to the second transmission power.

After the UE received a signaling for changing to a power mode, the UE may derive $PL(q_{PL})$ according to the measurement object such as $q_{PL}$ corresponding to the new power mode. In one embodiment, the UE may derive the DL pathloss estimate $PL(q_{PL})$ by resetting a calculation of the RSRP.

FIG. 21 and FIG. 22 illustrate schematic diagrams of calculation of DL pathloss estimate according to an embodiment of the present disclosure. Referring to FIG. 21, after the UE received a signaling for changing from the normal power mode to the energy saving mode, the UE may reset L3-RSRP filter. The UE may derive $RSRP_{L3,n1}(q_{PL} = PL$ - RS#0) (i.e., the measurement result of L3-RSRP of transmission occasion $n_1$) based on equation (4-1) instead of equation (4-2) such that $RSRP_{L3,n1}(q_{PL} = PL - RS\#0) = RSRP_{L1,n1}(q_{PL} = PL - RS\#0)$. That is, the $RSRP_{L3,n0}(q_{PL} = PL - RS\#0)$ (i.e., the measurement result of L3-RSRP of transmission occasion $n_0$) may not be used for calculation of $RSRP_{L3,n1}(q_{PL} = PL$ - RS#0). Accordingly, the DL pathloss estimate $PL(q_{PL}) = P_{Tx,ES}(q_{PL} = PL - RS\#0) - RSRP_{L3,n1}(q_{PL} = PL$ - RS#0) may be derived by the UE, wherein $P_{Tx,ES}$ is the transmission power of PL-RS#0 in ES mode.

Referring to FIG. 22, after the UE received a signaling for changing from the energy saving mode to the normal power mode, the UE may reset L3-RSRP filter. The UE may derive $RSRP_{L3,n1}(q_{PL} = PL - RS\#0)$ (i.e., the measurement result of L3-RSRP of transmission occasion $n_1$) based on equation (4-1) instead of equation (4-2) such that $RSRP_{L3,n1}(q_{PL} = PL - RS\#0) = RSRP_{L1,n1}(q_{PL} = PL - RS\#0)$. That is, the $RSRP_{L3,n0}(q_{PL} = PL - RS\#0)$ (i.e., the measurement result of L3-RSRP of transmission occasion $n_0$) may not be used for calculation of $RSRP_{L3,n1}(q_{PL} = PL$ - RS#0). Accordingly, the DL pathloss estimate $PL(q_{PL}) = P_{Tx}(q_{PL} = PL - RS\#0) - RSRP_{L3,n1}(q_{PL} = PL - RS\#0)$ may be derived by the UE, wherein $P_{Tx}$ is the transmission power of PL-RS#0 in NP mode.

In one embodiment, after the UE received a signaling for power mode changing, the UE may calculate the DL pathloss estimate $PL(q_{PL})$ according to a power offset. FIG. 23 illustrates a schematic diagram of transmission power of power mode according to an embodiment of the present disclosure. For PUCCH or PUSCH resource indicated by SRI, the UE may be configured with a RS power for the NP mode and one or more power offsets (e.g., $P_{offset}$) for the ES mode. For example, for a measurement object $q_{PL}$ (i.e.,PL-RS $q_{PL}$) corresponding to PL-RS ID#0 (e.g., ID corresponding to CSI-RS#1), the UE may configured with RS power #0 for the NP mode and may be configured with (RS power #0-$P_{offset}$) for the ES mode.

In one embodiment, in response to a measurement object (e.g., PL-RS) for DL pathloss estimate changing from a reference signal to another reference signal (e.g., reference signal with different transmission power), i.e., the LTE changes from a power mode (e.g., NP mode) to a different power mode (e.g., ES mode), the UE may update a calculation of the RSRP by the power offset. FIG. 24 illustrates a schematic diagram of compensate power offset in L1-RSRP in ES mode according to an embodiment of the present disclosure. After the UE received a signaling (or an indicator) for power mode changing, the UE may still apply still apply transmission power $P_{Tx}(q_{PL} = PL - RS\#0)$ of PL-RS#0 in NP mode for calculating the DL pathloss estimate $PL(q_{PL})$ such that $PL(q_{PL}) = P_{Tx}(q_{PL}) - RSRP_{L3,n1}$, wherein $RSRP_{L3,n1}$ is the L3-RSRP at transmission occasion $n_1$. After calculating L1-RSRP in ES mode, the UE may add the power offset $P_{offset}$ into the calculated L1-RSRP such that $RSRP_{L3,n1} = (1 - a) \cdot RSRP_{L3,n0} + a \cdot (RSRP_{L1,n1} + P_{offset})$, wherein $RSRP_{L3,n0}$ is the L3-RSRP at transmission occasion $n_0$ and $RSRP_{L1,n1}$ is the L1-RSRP at transmission occasion $n_1$.

In one embodiment, in response to a measurement object (e.g., PL-RS) for DL path estimate changing from a reference signal to another reference signal (e.g., reference signal with different PL-RS ID), the UE may reset a calculation of the RSRP by, for example, resetting the L3-RSRP filter. After the UE received a signaling (or an indicator) for power mode changing, the UE may apply the corresponding PL-RS (e.g., PL-RS corresponding to the NP mode or PL-RS corresponding to the ES mode) for the channel or the RS to estimate the DL pathloss. FIG. 25 illustrates a schematic diagram of beam pattern of power mode according to an embodiment of the present disclosure. For PUCCH or PUSCH resource indicated by SRI, the UE may be configured with a PL-RS ID for the normal power mode and one or more PL-RS IDs for the energy saving mode. For example, the measurement object (e.g., PL-RS) for calculation of DL pathloss estimate may change to $q_{PL}$ = PL-RS ID#0 for NP mode and may change to $q_{PL}$ = PL-RS ID_ES for ES mode. It should be noted that the transmission powers of PL-RS ID#0 and PL-RS ID_ES may be the same.

In one embodiment, after the UE received a signaling for power mode changing, the UE may calculate the DL pathloss estimate $PL(q_{PL})$ according to an implicit ES-mode specific PL-RS. FIG. 26 and FIG. 27 illustrate schematic diagrams of transmission power for ES mode according to an embodiment of the present disclosure. A CSI-RS transmitted by the BS 10 may be quasi co-located with a reference signal such as SSB#A. The BS 100 may reduce CSI-RS transmission power for energy saving mode. For PUCCH or PUSCH resource indicated by SRI, the UE may be configured with a PL-RS ID for NP mode but may not be configured with a PL-RS ID for ES mode. Assume a PL-RS (e.g., CSI-RS) is quasi co-located with a RS (e.g., SSB), after the UE received a signaling for power mode changing, the UE may apply the PL-RS (e.g., CSI-RS) corresponding to the PL-RS ID for calculating the DL pathloss estimate if the signaling indicates the LTE to change to the NP mode, and the LTE may apply the RS (e.g., SSB) for calculating the DL pathloss estimate if the signaling indicates the UE to change to the ES mode. If the UE receives the indicator for power mode changing or if the UE changes the measurement object (e.g., PL-RS ID), the UE may reset L3-RSRP filter.

For example, assume CSI-RS#An (n=1-5) transmitted by the BS 10 are quasi co-located with SSB#A. The UE may calculate the DL pathloss estimate according to the measurement object $q_{PL}$ = PL-RS ID#0 (e.g., CSI-RS#An quasi co-located with SSB#A) in the NP mode, and the UE may calculate the DL pathloss estimate according to the measurement object $q_{PL}$ = SSB#A in the ES mode, as shown in FIG. 26. For another example, assume CSI-RS#A1 transmitted by the BS 10 is quasi co-located with SSB#A. The LTE may calculate the DL pathloss estimate according to the measurement object $q_{PL}$ = PL-RS ID#0 (e.g., CSI-RS#A1) in the NP mode, and the UE may calculate the DL pathloss estimate according to the measurement object $q_{PL}$ = SSB#A in the ES mode, as shown in FIG. 27.

FIG. 28 illustrates a flowchart of determining a measurement object for the LTE according to an embodiment of the present disclosure, wherein the measurement object may be used for calculating the DL pathloss estimate. In step S281, the UE may determine the power mode currently being applied. If the BS or the UE is in the NP mode, the UE may execute step S282. If the BS or the US is in the ES mode, the UE may execute step S283.

In step S282, the LTE may determine a first PL-RS as the measurement object according to a first configuration (e.g., configuration of $PL - RS_{NP}$, wherein $PL - RS_{NP}$ represents PL-RS for NP mode).

In step S283, the UE may determine whether a $PL - RS_{ES}$ (i.e., PL-RS for ES mode) corresponding to the ES mode is configured. If the UE is configured with $PL - RS_{ES}$, the UE may execute step S285. If the UE is not configured with $PL - RS_{ES}$, the UE may execute step S284.

In step S284, the UE may determine a second PL-RS as the measurement object according to a spatial relation of the first PL-RS. For example, the UE may determine an SSB quasi co-located with the first PL-RS as the measurement object.

In step S285, the UE may determine a second PL-RS as the measurement object, wherein the second PL-RS may be the configured $PL - RS_{ES}$.

In one embodiment, the UE may determine whether the reset the calculation of the RSRP according to a time period between two power mode changings. FIG. 29 illustrates a schematic diagram of power mode changing according to an embodiment of the present disclosure. Assume the UE 20 change from the normal power mode to the energy saving mode at time point $T_0$, and the UE 20 change from the energy saving mode back to the normal power mode at tie point $T_1$. The UE 20 may determine whether to reset L3-RSRP filter (i.e., reset a calculation of RSRP) based on the time period $T_1 - T_0$. If the time period $T_1 - T_0$ is less than a threshold, L3-RSRP before mode changing (e.g., L3-RSRP of transmission occasion $n_0$) may still valid even after the mode changing back. That is, L3-RSRP of transmission occasion $n_0$ may be used for calculation of L3-RSRP of transmission occasion $n_1$.

For example, assume the UE receive a signaling for changing from the first power mode (e.g., normal power mode) to the second power mode (e.g., energy saving mode) at time point $T_0$, the LTE may start a timer. If the LTE receives another signaling for changing from the second power mode back to the first power mode at time point $T_1$ before the timer expires (or if time period $T_1 - T_0$ is less than or equal to a threshold), the UE may not reset the L3-RSRP filter. On the other hand, if the UE receive another signaling for changing from the second power mode back to the first power mode at time point $T_1$ after the timer expiring (or if time period $T_1 - T_0$ is greater than the threshold), the triggering condition for resetting L3-RSRP filter may be met and the LTE may reset the L3-RSRP filter when the UE is back to the first power mode. The timer of the first power mode may be stopped by the UE after the UE changes back to the first power mode.

In one embodiment, the UE may be configured with one or more L3-RSRP filter, wherein each L3-RSRP filter may be associated with a power mode (e.g., normal power mode or energy saving mode). For example, a L3-RSRP filter may be associated with mode 0 (i.e., normal power mode) and another L3-RSRP filter may be associated with mode 1 (i.e., energy saving mode). The LTE may derive the first measurement result of L3-RSRP based on equation (6-1) and may derive the nth (n>1) measurement result of L3-RSRP based on equation (6-2), wherein $RSRP_{L3,Mode,1}$ is the first measurement result of L3-RSRP, $RSRP_{L1,Mode,1}$ is the first measurement result of L1-RSRP, $RSRP_{L3,Mode,n}$ is the nth measurement result of L3-RSRP, $RSRP_{L1,Mode,n}$ is the nth measurement result of L1-RSRP, $RSRP_{L3,Mode,n-1}$ is the (n-1)the measurement result of L3-RSRP, "Mode" indicates the power mode (e.g., NP mode or ES mode), and "a" is a filter coefficient ($0 < a \leq 1$), wherein "a" may be configured by BS (e.g., gNB), determined according to the timer (e.g., $a = f(T_{max,Mode})$), or derived by a function of time (e.g., $a(\Delta T)$, wherein $\Delta T = T_1 - T_0$).

$$RSRP_{L3,Mode,1} = RSRP_{L1,Mode,1} \quad \ldots(6\text{-}1)$$

$$RSRP_{L3,Mode,n} = (1 - \mathrm{a}) \cdot RSRP_{L3,Mode,n-1} + \mathrm{a} \cdot RSRP_{L1,Mode,n} \quad \ldots(6\text{-}1)$$

FIG. 30 illustrates a schematic diagram of resetting of L3-RSRP filter according to an embodiment of the present disclosure. The LTE 20 may be configured with one or more timer of mode (e.g., $T_{max,Mode}$) for resetting the L3-RSRP filter of the power mode. Assume the UE 20 in the normal power mode receives a signaling for changing from the normal power mode to the energy saving mode at time point $T_0$, and the UE 20 receives a signaling for changing from the energy saving mode back to the normal power mode at time point $T_2$. The UE 20 may run the timer $T_{max,Mode=0}$ when the UE 20 is in the normal power mode. If the timer $T_{max,Mode=0}$ expires at time point $T_1$ before the time point $T_2$, the triggering condition for resetting L3-RSRP filter may be met and the UE may reset the L3-RSRP. Accordingly, the UE 20 may calculate L3-RSRP of the transmission occasion $n_1$ based on the equation (6-1) such that $RSRP_{L3,Mode=0,n1}$ = $RSRP_{L1,Mode=0,n1}$, wherein $RSRP_{L3,Mode=0,n1}$ is L3-RSRP of normal power mode at transmission occasion $n_1$ and $RSRP_{L1,Mode=0,n1}$ is L1-RSRP of normal power mode at transmission occasion $n_1$. $RSRP_{L3,Mode=0,n0}$ (L3-RSRP of normal power mode at transmission occasion $n_0$) may not be used for calculation of $RSRP_{L1,Mode=0,n1}$.

FIG. 31 illustrates a schematic diagram of resetting of L3-RSRP filter according to an embodiment of the present disclosure. The LTE 20 may be configured with one or more timer of mode (e.g., $T_{max,Mode}$) for resetting the L3-RSRP filter of the power mode. Assume the UE 20 in the normal power mode receives a signaling for changing from the normal power mode to the energy saving mode at time point $T_0$, and the UE 20 receives a signaling for changing from the energy saving mode back to the normal power mode at time point $T_2$. The UE 20 may runt the timer $T_{max,Mode=0}$ when the UE 20 is in the normal power mode. If the timer $T_{max,Mode=0}$ does not expire before the timer point $T_2$, the triggering condition for resetting L3-RSRP filter may not be met and the UE 20 may not reset the L3-RSRP. Accordingly, the UE 20 may calculate L3-RSRP of the transmission occasion $n_1$ based on equation (6-2) such that $RSRP_{L3,Mode=0,n1}$ = a · $RSRP_{L1,Mode=0,n1}$ + (1 - a) . $RSRP_{L3,Mode=0,n0}$ , wherein $RSRP_{L3,Mode=0,n1}$ is L3-RSRP of normal power mode at transmission occasion $n_1$ , $RSRP_{L1,Mode=0,n1}$ is L1-RSRP of normal power mode at transmission occasion $n_1$, and $RSRP_{L3,Mode=0,n0}$ is L3-RSRP of normal power mode at transmission occasion $n_0$.

FIG. 32 illustrates a schematic diagram of explicit ES-mode specific offset power according to an embodiment of the present disclosure. The UE 20 may be configured with one or more offset powers, wherein each offset power $P_{0_UE,Mode}$ may be associated with a power mode. For example, offset power $P_{0_UE,mode=0}$ may be associated with normal power mode (or CSI-RS#A1) and offset power $P_{0_UE,mode=1}$ may be associated with energy saving mode (or CSI-RS#A1'). The UE 20 may determine the $P_{0_UE,mode}$ according to a signaling for power mode changing. The UE 20 may calculate the nominal power $P_0(j)$ according to the target received power $P_{0_Nominal,j}$ (or a second nominal power) at BS 10 and the offset power $P_{0_UE,mode}$ based on equation (2).

FIG. 33 illustrates a schematic diagram of explicit ES-mode specific parameter $\alpha$ according to an embodiment of the present disclosure, wherein $\alpha$ may be a fractional power control factor. The UE may be configured with one or more parameters $\alpha$, wherein each parameter $\alpha$ may be associated with a power mode. For example, parameter $\alpha_{mode=0}$ may be associated with normal power mode (or CSI-RS#A3) and parameter $\alpha_{mode=1}$ may be associated with energy saving mode (or CSI-RS#A3').

FIG. 34 illustrates a schematic diagram of implicit ES-mode specific offset power according to an embodiment of the present disclosure. A CSI-RS transmitted by the BS 10 may be quasi co-located with a reference signal such as SSB#A. The BS 10 may reduce CSI-RS transmission power for energy saving mode. In one embodiment, for PUCCH or PUSCH resource indicated by SRI, the UE may be configured with a one or more offset powers $P_{0_UE,j}$ for ES mode, wherein each offset power $P_{0_UE,j}$ may be used for calculating the nominal power $P_0(j)$ based on equation (2) (i.e., $P_0(j)$ = $P_{0_Nominal,j}$ + $P_{0_UE,j}$ ). If the UE receives a signaling for changing into the normal power mode, the LTE may set the offset power $P_{0_UE,j}$ to be equal to zero. If the UE receives a signaling for changing into the energy saving mode, the UE may set the offset power $P_{0_UE,j}$ to be greater than zero, wherein j=0 may represent the transmission occasion for MSG3 in random access, j=1 may represent the transmission occasion for configured grant, and j=2 to 31 may represent the transmission occasions for dynamic grant, wherein each index j may be associated with a value of SRI for j=2 to 31. In one embodiment, the UE may change to the ES mode at the transmission occasion j=0. In one embodiment, the LTE may change to the NP mode at the transmission occasions j=1 to 31.

In one embodiment, for PUCCH or PUSCH resource indicated by SRI, the UE may be configured with a one or more parameters $\alpha$ for various transmission occasions, wherein $\alpha$ may be a fractional power control factor. The LTE may set $\alpha$ to be $\alpha(j = 0)$ for transmission occasion j=0, wherein $\alpha(j = 0)$ may be equal to msg3-Alpha from Alpha in *PUSCH-PowerControl* or $\alpha(j = 0)$ may be equal to zero if *PUSCH-PowerControl* is not provided to the UE. The UE may set $\alpha$ to be $\alpha(j = 1)$ for transmission occasion j=1, wherein $\alpha(j = 1)$ may be equal to alpha from PO-PUSCH-Alpha in ConfiguredGrantConfig providing an index P0-PUSCH-AlphaSetId to a set of P0-PUSCH-AlphaSet. The LTE may set

$\alpha$ to be $\alpha(j \geq 2)$ for transmission occasions j=2 to 31, wherein $\alpha(j \geq 2)$ may be equal to a set of alpha in P0-PUSCH-AlphaSet indicated by a respective set of PO-PUSCH-AlphaSetId. In one embodiment, the UE may change to the ES mode at the transmission occasion j=0. In one embodiment, the UE may change to the NP mode at the transmission occasions j=1 to 31.

The UE may set the parameter $\alpha$ to be $\alpha_{mode=0}$ if the LTE receives a signaling for changing into the normal power mode, and the UE may set the parameter $\alpha$ to be $\alpha_{mode=1}$ if the UE receives a signaling for changing into the energy saving mode. In one embodiment, the UE may change to the ES mode at the transmission occasion j=0. In one embodiment, the UE may change to the NP mode at the transmission occasions j=1 to 31.

In one embodiment, the LTE may accumulate TPC command per mode (e.g., mode=0 for NP mode or mode=1 for ES mode) based on equation (7), wherein *f*(*i, mode*) is the power control adjustment corresponding to the mode at transmission occasion i, *f(i* - 1, *mode*) is the power control adjustment corresponding to the mode at transmission occasion (i-1), M is the number of received TPC command value corresponding to the mode during a window between the transmission occasion i and the transmission occasion (i-1), $\delta$(*m, mode*) is the mth TPC command value corresponding to the mode, and $\sum_{m=0}^{M-1} \delta(m, mode)$ is the sum of TPC command values associated with the same mode during the time period. The window may be between a first symbol (or a first set of symbols or a first symbol set) before an UL transmission at a first transmission occasion (e.g., transmission occasion i) and a second symbol (or a second set of symbols or a second symbol set) before an UL transmission at a second transmission occasion (e.g., transmission occasion (i-1)).

$$f(i, mode) = f(i-1, mode) + \sum_{m=0}^{M-1} \delta(m, mode) \qquad \ldots(7)$$

FIG. 35 illustrates a schematic diagram 350 of ES-mode specific TPC command accumulation according to an embodiment of the present disclosure. Assume the UE receives a signaling for changing from a first power mode (e.g., the normal power mode) to second power mode (e.g., the energy saving mode) at time point $T_1$. The UE may reset a calculation of power control adjustment at time point $T_1$ (i.e., reset TPC command accumulation at time point $T_1$). Accordingly, the UE may accumulate the power control adjustment *f(i, mode* = 1) = $\delta$(1, *mode* = 1). The power control adjustment *f*(*i* - 1, *mode* = 0) or TPC command value $\delta$(0*, mode* = 0) before time point $T_1$ may not be used for the calculation of the power control adjustment *f(i, mode* = 1).

In one embodiment, if the UE has capability of, for example, buffering more than one TPC command value for each ES mode, the UE may be configured with one or more timers of mode (e.g., $T_{max,mode}$) for resetting TPC command accumulation (i.e., calculation of power control adjustment), wherein the timer may be timeAlimentTimer. Assume the UE receives a signaling for changing from a first power mode to a second power mode at a first time point, the LTE may start or restart the timer $T_{max,mode}$ . If the LTE receives another signaling for changing from the second power mode back to the first power mode at a second time point before the timer $T_{max,mode}$ expires (or if time period between the second time point and the first time point is less than or equal to a threshold), the UE may not reset TPC command accumulation. On the other hand, if the UE receives another signaling for changing from the second power mode back to the first power mode at a second time point after the timer $T_{max,mode}$ expires (or if time period between the second time point and the first time point is greater than the threshold), the triggering condition for resetting the TPC command accumulation may be met and the UE may reset the TPC command accumulation when the UE is back to the first power mode. That is, the UE may reset the calculation of the power control adjustment for first power mode. The timer $T_{max,mode}$ of the first power mode may be stopped by the UE after the UE changes back to the first power mode.

FIG. 36 illustrates a schematic diagram of resetting of TPC command accumulation based on a timer according to an embodiment of the present disclosure. Assume the UE 20 in the normal power mode receives a signaling for changing from the normal power mode to the energy saving mode at time point $T_0$ and the UE 20 receives a signaling for changing from the energy saving mode back to the normal power mode at time point $T_2$. The UE 20 may run the timer $T_{max,mode=0}$ when the UE 20 is in the normal power mode. If the timer $T_{max,mode=0}$ expires at time point $T_1$ before the time point $T_2$, the triggering condition for resetting the TPC command accumulation may be met and the LTE 20 may reset the TPC command accumulation for the normal power mode. Accordingly, the power control adjustment *f*(*i - 1, mode* = 0) for the transmission occasion (i-1) before the time point $T_0$ may not be used for the calculation of the power control adjustment *f(i, mode* = 0) for the transmission occasion i after the time point $T_2$.

FIG. 37 illustrates a schematic diagram of resetting of TPC command accumulation based on a timer according to an embodiment of the present disclosure. Assume the UE 20 in the normal power mode receives a signaling for changing from the normal power mode to the energy saving mode at time point $T_0$ and the UE 20 receives a signaling for changing from the energy saving mode back to the normal power mode at time point $T_1$. The UE 20 may run the timer $T_{max,mode=0}$ when the UE 20 is in the normal power mode. If the timer $T_{max,mode=0}$ does not expires before the time point $T_1$, the triggering condition for resetting the TPC command accumulation may not be met and the LTE 20 may not reset the TCP command accumulation for the normal power mode. Accordingly, the power control adjustment *f(i - 1, mode* = 0) for the transmission occasion (i-1) before the time point $T_0$ may be used for the calculation of the power control adjustment *f(i, mode* = 0) for the transmission occasion i after the time point $T_1$, wherein *f(i, mode* = 0) = *f*(*i* - 1, *mode* = 0) + $\Sigma_m$ $\delta$(*m, mode* = 0) . $\delta$(*m, mode* = 0) may be the TPC command value received by the UE 20 when during the normal power mode.

In one embodiment, when the BS (or NW) performs energy saving, LTE not supporting the ES mode may receive a reconfiguration for updating DL power control related parameters (e.g., PL-RS ID, transmission power of PL-RS ID, $P_0$, or TPC command value).

In one embodiment, when of before the BS (or NW) performs energy saving at, for example, Cell#a, the UE not supporting the ES mode may receive an indication for Scell (e.g., Cell#a) de-activation, and the LTE may receive another indication for Scell (e.g., Cell#b) activation.

FIG. 38 illustrates a schematic diagram of communication device 380 according to an embodiment of the present disclosure, wherein the communication device 380 may execute the functions or steps implemented by the LTE (e.g., LTE 20) in the embodiments corresponding to FIG. 1 to FIG. 37. The communication device 380 may include a processor 381, a storage medium 382, and a transceiver 383.

The processor 381 is, for example, a graphics processing unit (GPU), an image signal processor (ISP), an image processing unit (IPU), a central processing unit (CPU), another programmable general purpose or special purpose micro control unit (MCU), a microprocessor, a digital signal processor (DSP), a programmable controller, a special application specific integrated circuit (ASIC), an arithmetic logic unit (ALU), a complex programmable logic device (CPLD), a field programmable gate array (FPGA) or other similar components or a combination of the foregoing components. The processor 381 may be coupled to the storage medium 382 and the transceiver 383, and may access and excrete a plurality of modules and various application programs stored in the storage medium 382.

The storage medium 382 is, for example, any type of fixed or removable random access memory (RAM), a read-only memory (ROM), a flash memory, a hard disk drive (HDD), a solid state drive (SSD), or similar components or a combination of the foregoing components, and is configured to store the plurality of modules or various application programs that can be executed by the processor 381.

The transceiver 383 may be configured to transmit or receive wireless signals. The transceiver 383 may also perform operations such as low noise amplifying, impedance matching, frequency mixing, up or down frequency conversion, filtering, amplifying, and so forth. The transceiver 383 may include one or more digital-to-analog (D/A) converters or analog-to-digital (A/D) converters.

FIG. 39 illustrates a schematic diagram of network element 390 according to an embodiment of the present disclosure, wherein the network element 390 may execute the functions or steps implemented by the BS (e.g., BS 10) in the embodiments corresponding to FIG. 1 to FIG. 37. The network element 390 may include a processor 391, a storage medium 392, and a transceiver 393.

The processor 391 is, for example, a GPU, an ISP, an IPU, a CPU, another programmable general purpose or special purpose MCU, a microprocessor, a DSP, a programmable controller, a special ASIC, an ALU, a CPLD, a FPGA or other similar components or a combination of the foregoing components. The processor 391 may be coupled to the storage medium 392 and the transceiver 393, and may access and excrete a plurality of modules and various application programs stored in the storage medium 392.

The storage medium 392 is, for example, any type of fixed or removable RAM, a ROM, a flash memory, a HDD, a SSD, or similar components or a combination of the foregoing components, and is configured to store the plurality of modules or various application programs that can be executed by the processor 391.

The transceiver 393 may be configured to transmit or receive wireless signals. The transceiver 393 may also perform operations such as low noise amplifying, impedance matching, frequency mixing, up or down frequency conversion, filtering, amplifying, and so forth. The transceiver 393 may include one or more D/A converters or A/D converters.

FIG. 40 illustrates a flowchart of a method of power control for wireless communication according to an embodiment of the present disclosure, wherein the method may be implemented by the communication device 380 as shown in FIG. 38. In step S401, determining an uplink transmission power for a cell in a first transmission occasion according to a parameter set, wherein the parameter set comprises a first nominal power, a downlink pathloss estimate, and a first power control adjustment.

FIG. 41 illustrates a flowchart of a method of power control for wireless communication according to an embodiment of the present disclosure, wherein the method may be implemented by the network element 390 as shown in FIG. 39. In step S411, transmitting a first configuration of a parameter set for a cell, wherein the parameter set comprises a first nominal power.

In summary, the present disclosure provides a method of transmission power control for the communication device and/or the network element. For example, the communication device may automatically adjust UL transmission power to adapt the beam coverage or the beam pattern of the network element after the network element turning into energy saving mode or back to normal power mode. Accordingly, the robustness of wireless communication may be improved and the power consumption of the communication device (or network element) may be reduced.

A cell in the present disclosure may include a serving cell, a carrier or a CC (component carrier), a serving cell, MCG (master cell group), or SCG (second cell group), but not limited herein.

The term "configured" in the present disclosure may be replaced by the term "default", "predefined", "fixed", "activated", or "indicated", but not limited herein.

RRC in the present disclosure may be replaced by MAC CE or DCI, but not limited herein.

Power in the present disclosure may be maximum output power, EIRP (effective isotropic radiated power), total radiated power, radiated power, minimum peak EIRP, maximum EIRP, max total radiated power, spherical coverage, configured transmitted power, P-max, maximum total transmit power, or power class, but not limited herein.

LTL transmission in the present disclosure may be PUSCH, PUCCH, PRACH, SRS, or RS, but not limited herein.

A RS in the present disclosure may include a DL RS and/or a LTL RS.

A DL RS configuration in the present disclosure may be associated with a DM-RS group, a DM-RS group index, a DM-RS resource, a DM-RS resource index, a DM-RS port index, a DM-RS port, a CSI-RS resource set index, a CSI-RS resource set, a CSI-RS resource index, a CSI-RS resource, a CSI-RS port index, a CSI-RS port, a SSB resource set index, a SSB resource set, a SSB resource index, a SSB resource, a SSB port index, or a SSB port, but not limited herein.

A LTL RS configuration in the present disclosure may be associated with a DM-RS group, a DM-RS group index, a DM-RS resource, a DM-RS resource index, a DM-RS port index, a DM-RS port, a RACH group, a RACH group index, A RACH resource, a RACH resource index, a SRS resource set index, a SRS resource set, a SRS resource index, a SRS resource, a SRS port index, or a SRS port, but not limited herein.

A beam in the present disclosure may be represented by an antenna, an antenna port, an antenna element, a group of antenna, a group of antenna port, a group of antenna element, a spatial domain filter, a reference signal resource, or a QCL assumption, but not limited herein. For example, a first beam may be represented as a first antenna port, a first group of antenna port or a first spatial domain filter. For another example, a first beam direction may be represented as a QCL assumption or a spatial domain filter.

A Rx beam configuration in the present disclosure may include a spatial Rx parameter, a spatial domain receive filter, or a panel, but not limited herein.

A Tx beam configuration in the present disclosure may include a spatial Tx parameter, a spatial domain transmission filter, or a panel, but not limited herein.

An index or an identity of the present disclosure may include CORESETPoolIndex, TRP ID, or Panel ID, but not limited here.

A cell TRP in the present disclosure may be a TRP, a serving cell, a gNodeB (gNB), a panel, an unlicensed cell, an unlicensed serving cell, an unlicensed TRP, an eNodeB (evolved NodeB), or an eNB, but not limited herein.

A configured grant in the present disclosure may be a configured grant configuration or *configuredGrantConfigIndex,* but not limited herein.

A communication device in the present disclosure may be represented by UE, or gNodeB, but not limited herein.

Combinations of embodiments disclosed in the present disclosure is not precluded.

All steps in the embodiments disclosed in the present disclosure may not be performed in a step-by-step way.

Embodiments disclosed in the present disclosure may apply for unlicensed band, licensed band, non-DRX mode, DRX mode, energy saving, or power saving, but not limited herein.

## Claims

**1.** A method of power control for wireless communication, adapted to a communication device (380), comprising:
determining an uplink transmission power for a cell in a first transmission occasion according to a parameter set, wherein the parameter set comprises a first nominal power, a downlink pathloss estimate, and a first power control adjustment.

**2.** The method of claim 1, wherein the first nominal power is equal to a second nominal power plus an offset power.

**3.** The method of claim 2, further comprising:
in response to receiving a signaling for changing into a first mode, setting the offset power to be greater than zero.

**4.** The method of claim 2, further comprising:
in response to receiving a signaling for changing into a second mode, setting the offset power to be equal to zero.

**5.** The method of claim 1, further comprising:

receiving a first configuration of pathloss estimate, wherein the first configuration of pathloss estimate comprises a first reference signal corresponding to a first power; and
calculating the downlink pathloss estimate according to the first configuration of pathloss estimate.

**6.** The method of claim 5, wherein the downlink pathloss estimate is equal to the first power of the first reference signal minus a reference signal received power.

**7.** The method of claim 6, wherein the first configuration of pathloss estimate further comprises a second reference signal corresponding to a second power.

**8.** The method of claim 7, wherein the step of calculating the downlink pathloss estimate comprising:

receiving a signaling; and
in response to the signaling is for changing into a first mode, calculating the downlink pathloss estimate according to the first reference signal.

**9.** The method of claim 8, wherein the step of calculating the downlink pathloss estimate further comprising:
in response to the signaling is for changing into a second mode, calculating the downlink pathloss estimate according to the second reference signal.

**10.** The method of claim 7, further comprising:
in response to a measurement object for the downlink pathloss estimate changing from the first reference signal to the second reference signal, resetting a calculation of the reference signal received power.

**11.** The method of claim 10, wherein the step of resetting the calculation of the reference signal received power comprising:

changing the measurement object from the first reference signal to the second reference signal at first time point and changing the measurement object from the second reference signal back to the first reference signal at second time point; and
in response to a time period between the second time point and the first time point being greater than a threshold, resetting the calculation of the reference signal received power.

**12.** The method of claim 7, further comprising:
in response to a measurement object for the downlink pathloss estimate changing from the first reference signal to the second reference signal, updating a calculation of the reference signal received power by a power offset.

**13.** The method of claim 6, further comprising:
in response to receiving a signaling for changing from a first mode into a second mode, resetting a calculation of the reference signal received power.

**14.** The method of claim 5, wherein the first reference signal is quasi co-located with a third reference signal.

**15.** The method of claim 14, further comprising:

receiving a signaling for changing into a second mode; and
updating the calculated downlink pathloss estimate according to the third reference signal.

**16.** The method of claim 1, wherein the first power control adjustment at the first transmission occasion is equal to a second power control adjustment at a second transmission occasion plus a sum of a plurality of transmission power control command values,
wherein each of the plurality of transmission power control command values is indicated by a downlink control information for an uplink transmission.

**17.** The method of claim 16, further comprising:
receiving the plurality of transmission power control command values during a window, wherein the window is between a first symbol before an uplink transmission at the first transmission occasion and a second symbol before an uplink transmission at the second transmission occasion.

**18.** The method of claim 17, wherein the first transmission occasion is later than the second transmission occasion.

**19.** The method of claim 16, further comprising:
in response to receiving a signaling for changing into a first mode or a second mode, resetting a calculation of the first power control adjustment.

**20.** The method of claim 19, wherein the step of resetting the calculation of the first power control adjustment comprising:

starting a timer based on the signaling; and
in response to the timer expiring, resetting the calculation of the first power control adjustment.

**21.** The method of claim 1, further comprising:
receiving a second configuration of a list of sub configurations, wherein each sub configuration of the list of sub configurations is associated with a power offset of a reference signal.

**22.** A method of power control for wireless communication, adapted to a network element (390), comprising:
transmitting a first configuration of a parameter set for a cell, wherein the parameter set comprises a first nominal power.

**23.** The method of claim 22, wherein the first nominal power is equal to a second nominal power plus an offset power.

**24.** The method of claim 22, further comprising:
transmitting a second configuration of pathloss estimate, wherein the second configuration of pathloss estimate comprises a first reference signal corresponding to a first power.

**25.** The method of claim 24, wherein the second configuration of pathloss estimate further comprises a second reference signal corresponding to a second power.

**26.** The method of claim 24, wherein the first reference signal is quasi co-located with a third reference signal.

**27.** The method of claim 22, further comprising:
transmitting a downlink control information for an uplink transmission, wherein the downlink control information comprises a first transmission power control command value.

**28.** The method of claim 27, further comprising:
receiving the uplink transmission according to the first configuration and the downlink control information.

**29.** The method of claim 22, further comprising:
transmitting a second configuration of a list of sub configurations, wherein each sub configuration of the list of sub configurations is associated with a power offset of a reference signal.

**30.** A communication device (380), comprising:

a transceiver (383); and
a processor (381), coupled to the transceiver (383), wherein the processor (381) is configured to:
determine an uplink transmission for a cell in a first transmission occasion according to a parameter set, wherein the parameter set comprises a first nominal power, a downlink pathloss estimate, and a first power control adjustment.

**31.** A network element (390), comprising:

a transceiver (393); and
a processor (391), coupled to the transceiver (393), wherein the processor (391) is configured to:
transmit a first configuration of a parameter set for a cell, wherein the parameter set comprises a first nominal power.

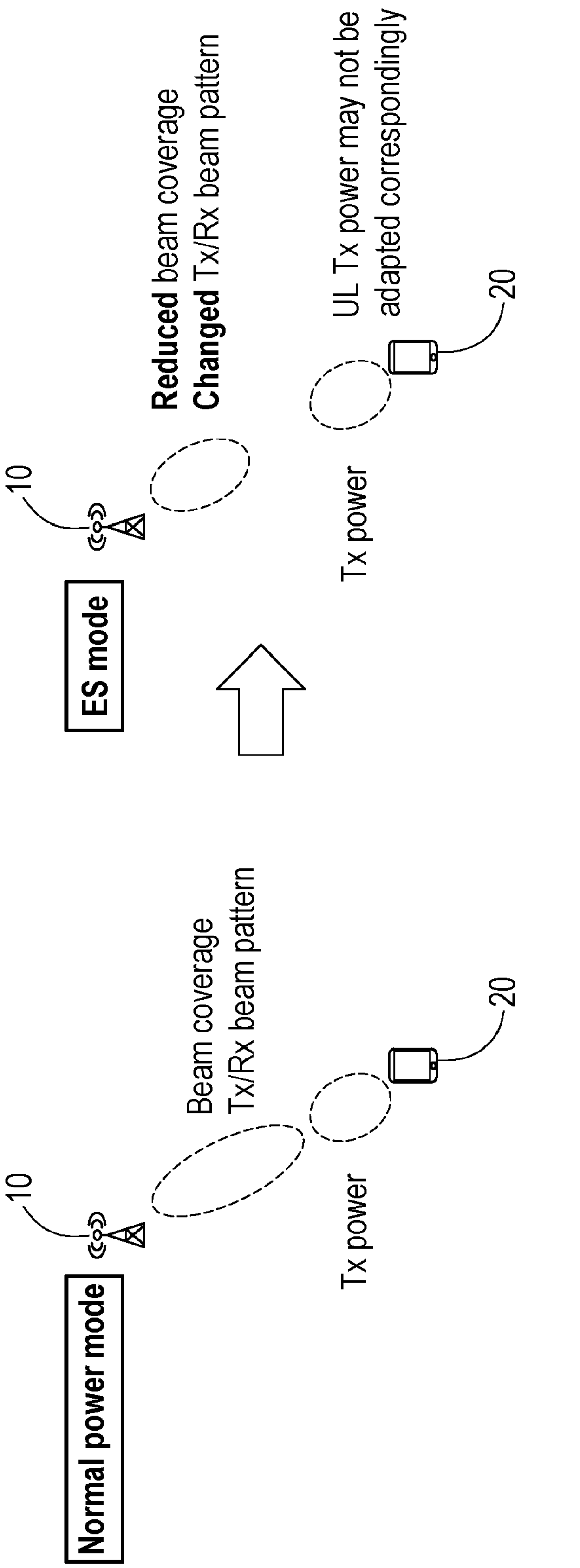

Normal power mode
10
Beam coverage
Tx/Rx beam pattern
Tx power
20
ES mode
10
**Reduced** beam coverage
**Changed** Tx/Rx beam pattern
Tx power
UL Tx power may not be adapted correspondingly
20


FIG. 1

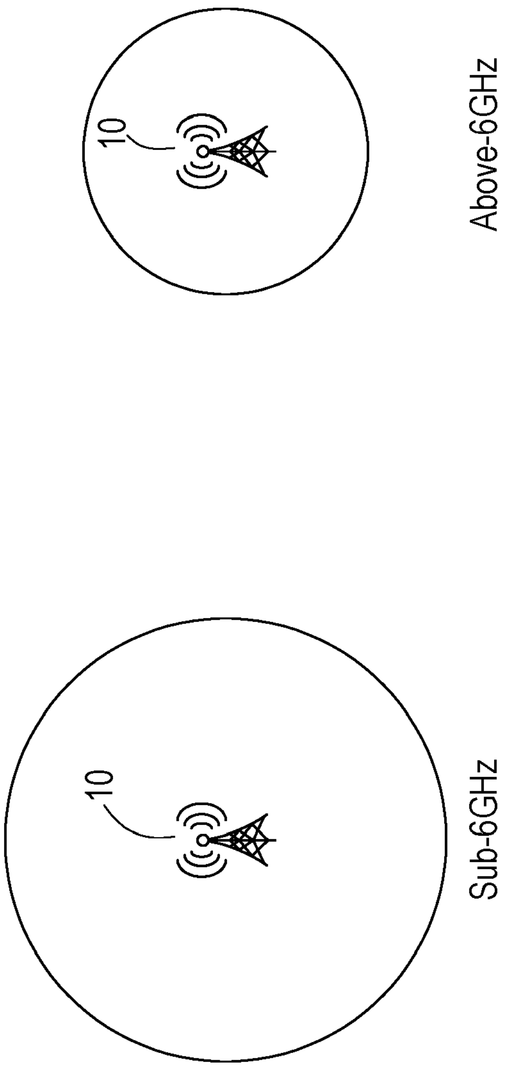


FIG. 2

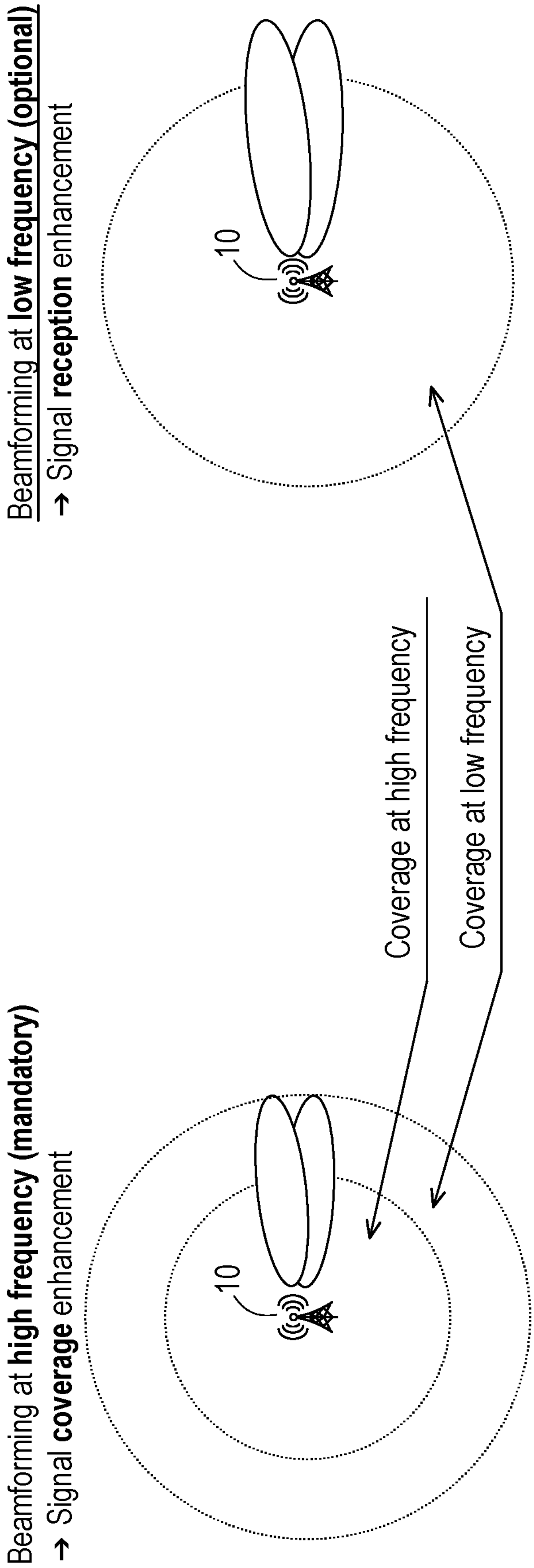

Beamforming at **high frequency (mandatory)**
→ Signal **coverage** enhancement
10
Coverage at high frequency
Coverage at low frequency
Beamforming at **low frequency (optional)**
→ Signal **reception** enhancement
10


FIG. 3

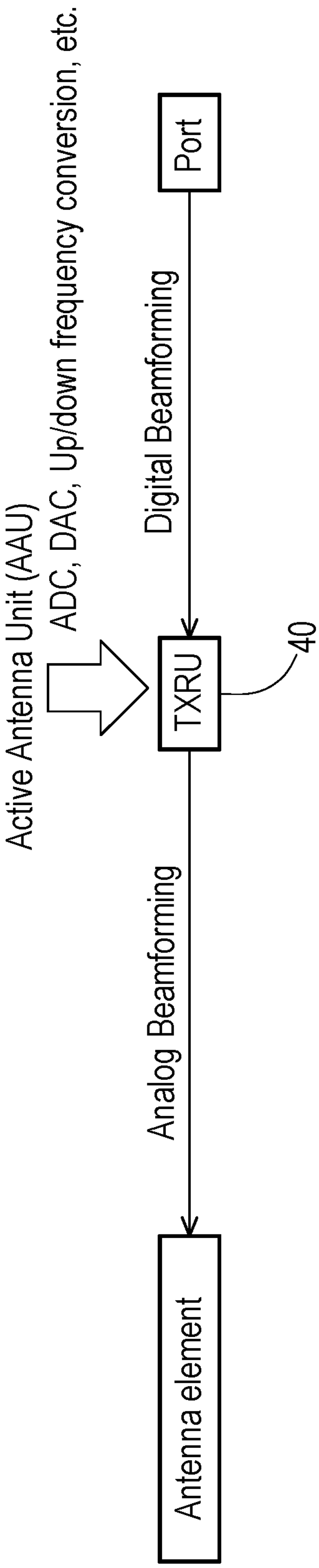
Active Antenna Unit (AAU)
ADC, DAC, Up/down frequency conversion, etc.
Port
Digital Beamforming
TXRU
40
Analog Beamforming
Antenna element

FIG. 4

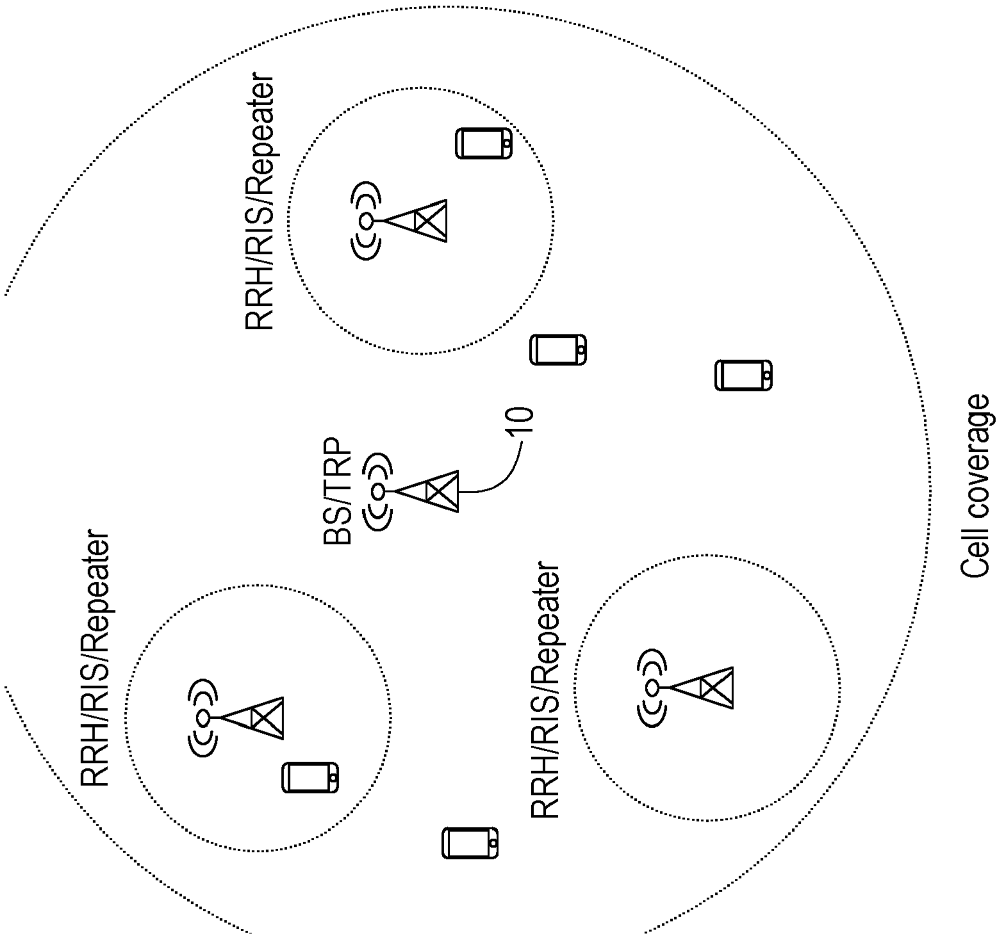
RRH/RIS/Repeater
RRH/RIS/Repeater
BS/TRP
10
RRH/RIS/Repeater
Cell coverage

FIG. 5

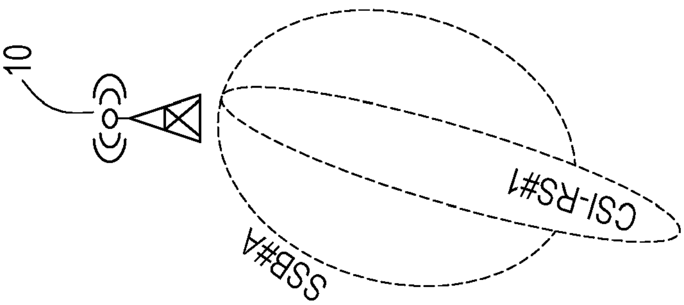


FIG. 6

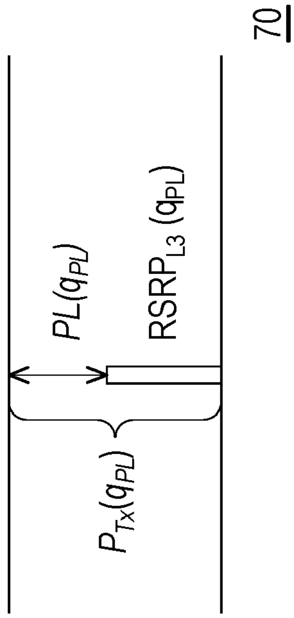


FIG. 7

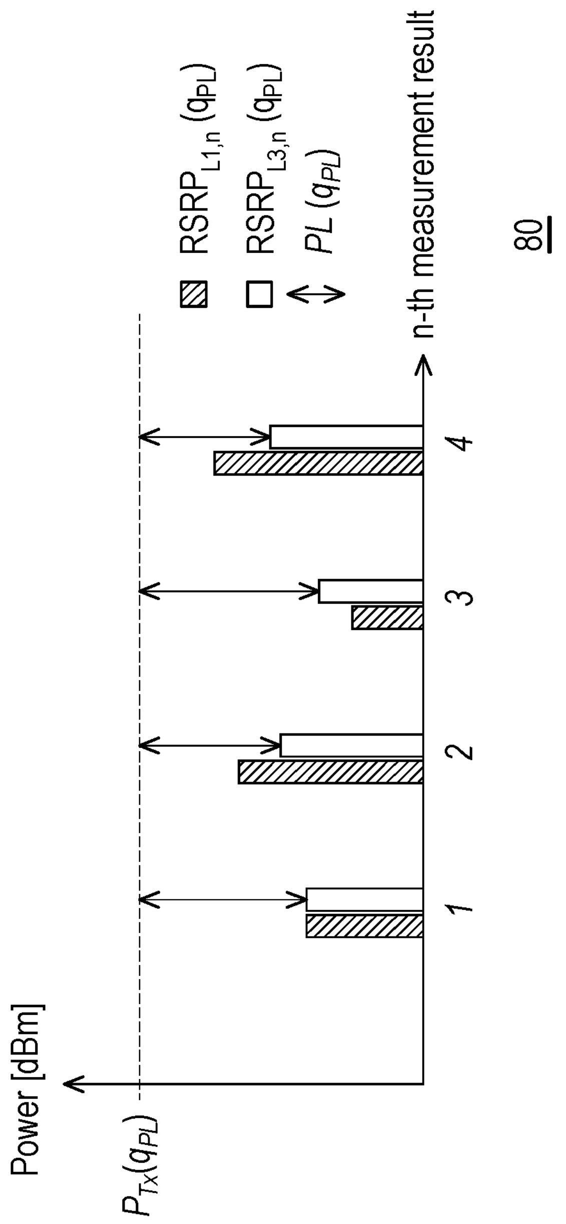
Power [dBm]
$P_{Tx}(q_{PL})$
$RSRP_{L1,n}$ $(q_{PL})$
$RSRP_{L3,n}$ $(q_{PL})$
$PL$ $(q_{PL})$
n-th measurement result
1
2
3
4
80

FIG. 8

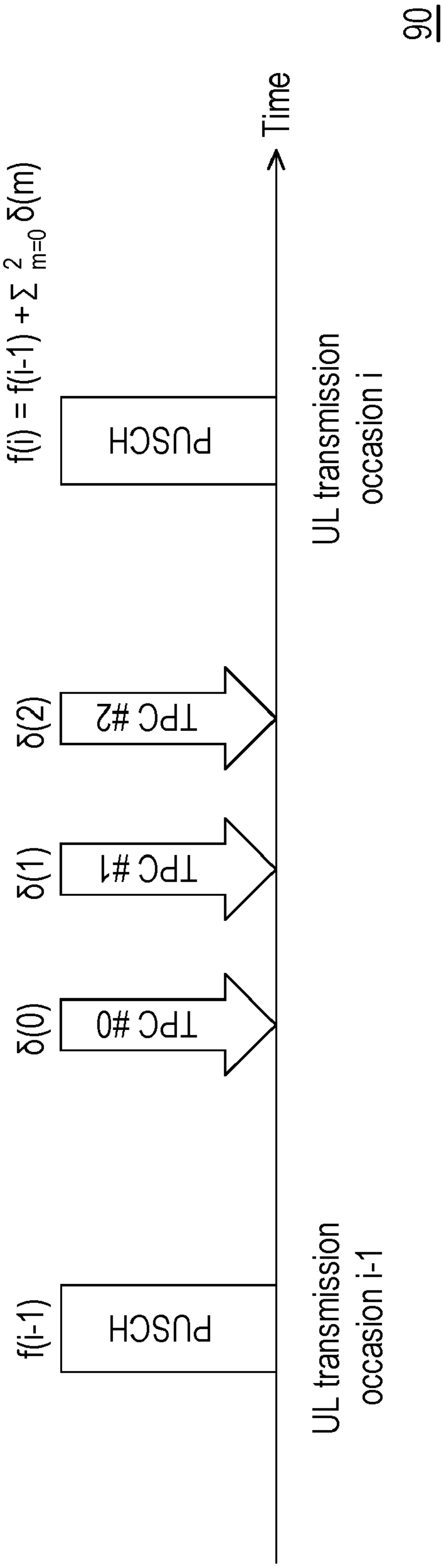
90
Time
$f(i) = f(i-1) + \sum_{m=0}^{2} \delta(m)$
PUSCH
UL transmission occasion i
δ(2)
TPC #2
δ(1)
TPC #1
δ(0)
TPC #0
f(i-1)
PUSCH
UL transmission occasion i-1

FIG. 9

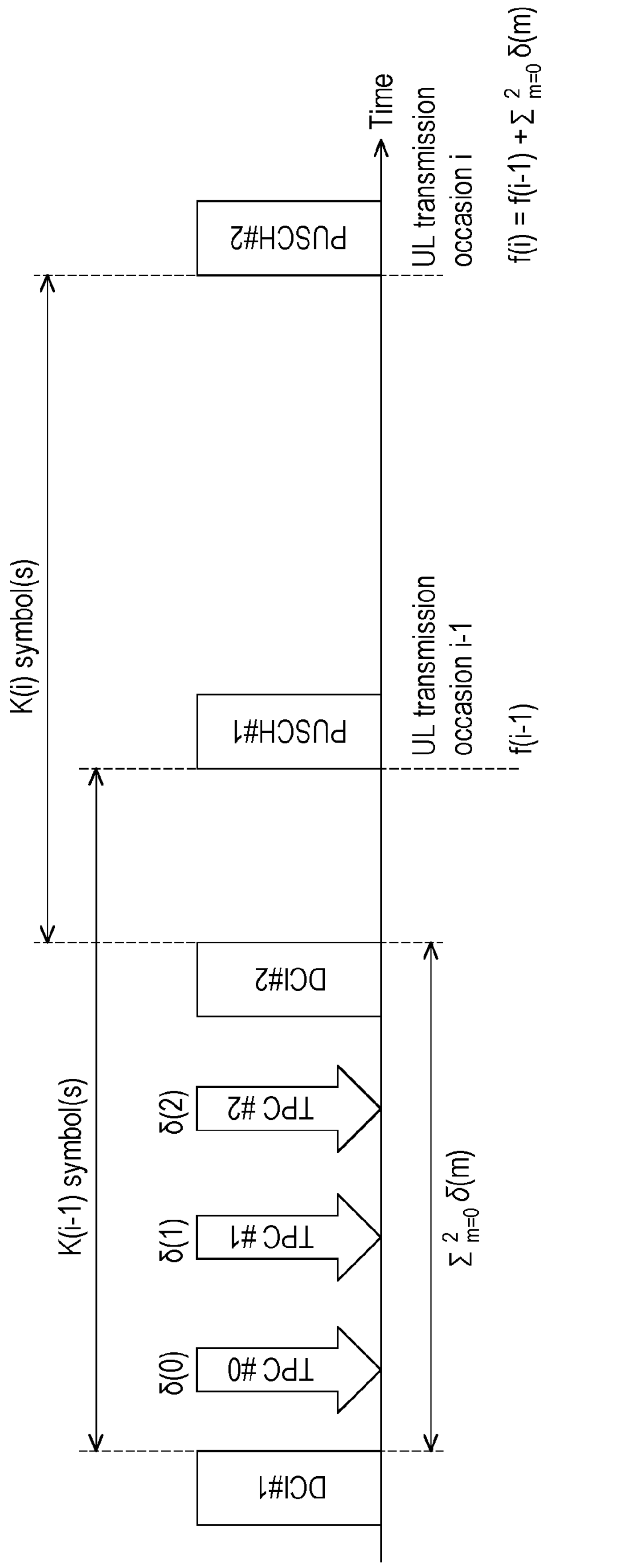
Time
DCI#1
TPC #0
δ(0)
TPC #1
δ(1)
TPC #2
δ(2)
DCI#2
PUSCH#1
PUSCH#2
K(i-1) symbol(s)
K(i) symbol(s)
$\Sigma_{m=0}^{2} \delta(m)$
UL transmission occasion i-1
f(i-1)
UL transmission occasion i
$f(i) = f(i-1) + \Sigma_{m=0}^{2} \delta(m)$

100

FIG. 10

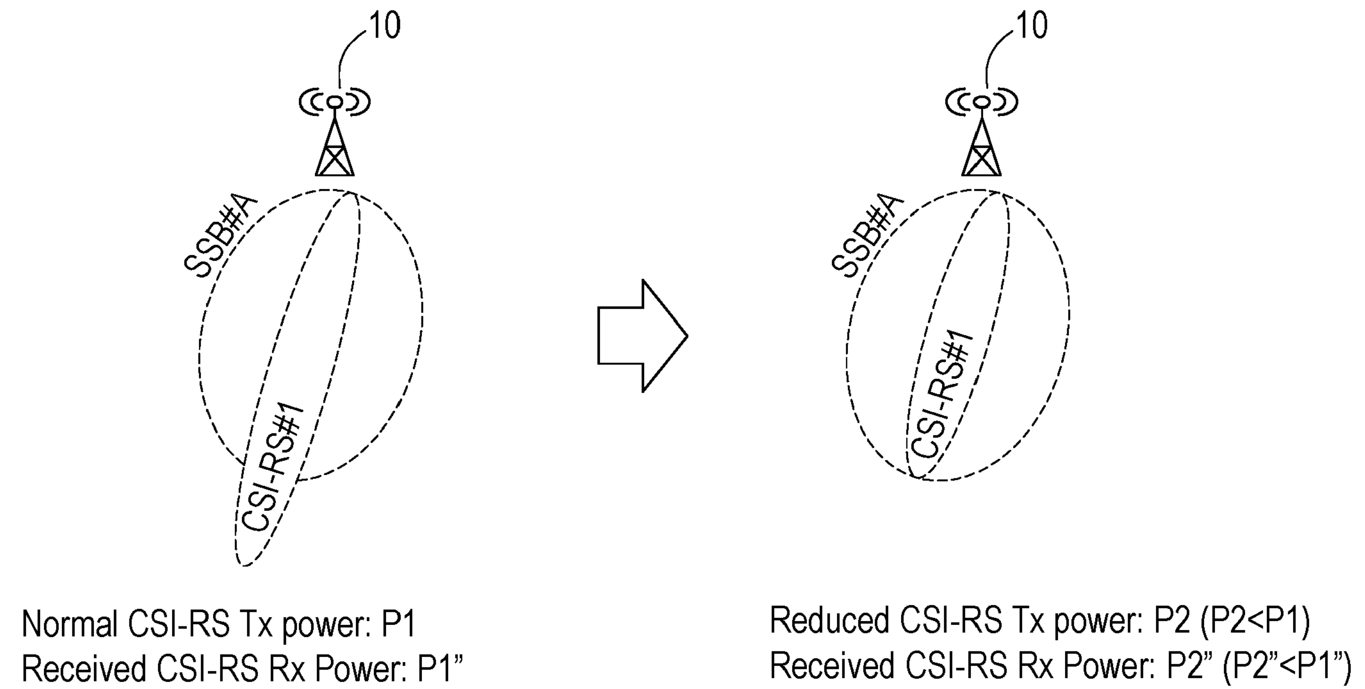
10
SSB#A
CSI-RS#1
Normal CSI-RS Tx power: P1
Received CSI-RS Rx Power: P1”
10
SSB#A
CSI-RS#1
Reduced CSI-RS Tx power: P2 (P2<P1)
Received CSI-RS Rx Power: P2” (P2”<P1”)

FIG. 11

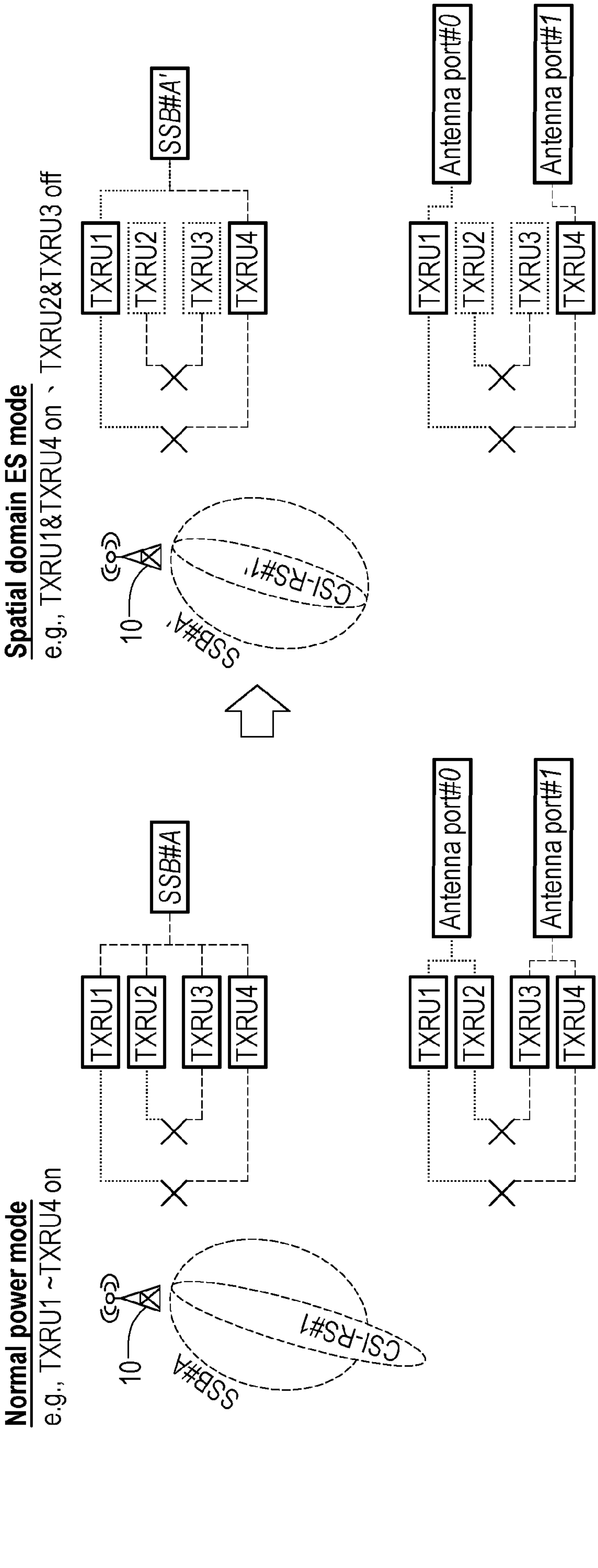
Normal power mode
e.g., TXRU1 ~TXRU4 on
10
SSB#A
CSI-RS#1
TXRU1
TXRU2
TXRU3
TXRU4
SSB#A
TXRU1
TXRU2
TXRU3
TXRU4
Antenna port#0
Antenna port#1
Spatial domain ES mode
e.g., TXRU1&TXRU4 on 、 TXRU2&TXRU3 off
10
SSB#A'
CSI-RS#1'
TXRU1
TXRU2
TXRU3
TXRU4
SSB#A'
TXRU1
TXRU2
TXRU3
TXRU4
Antenna port#0
Antenna port#1

FIG. 12

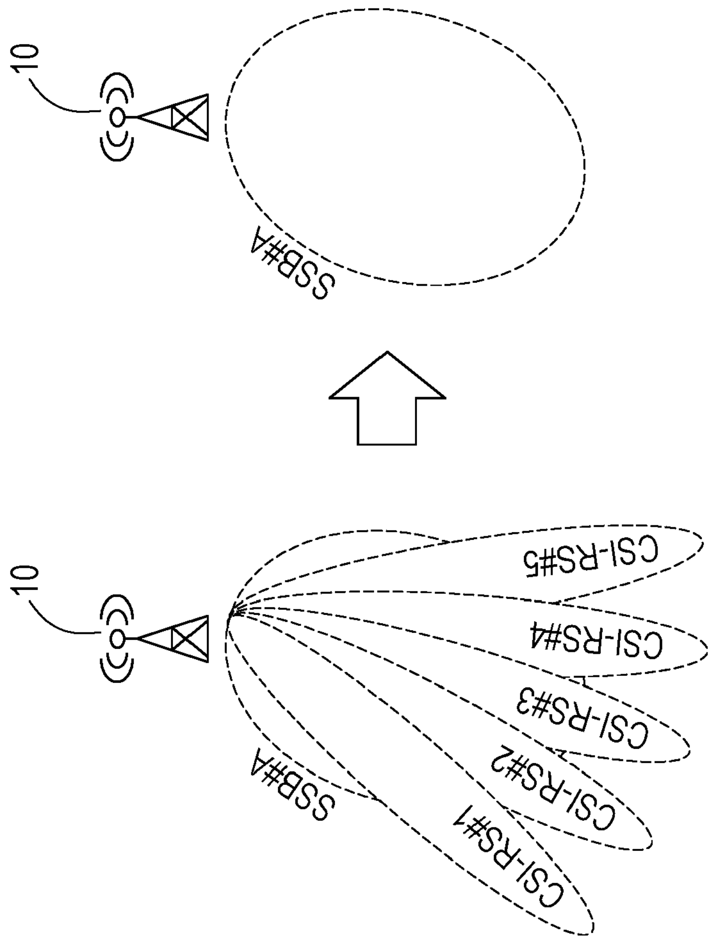


FIG. 13

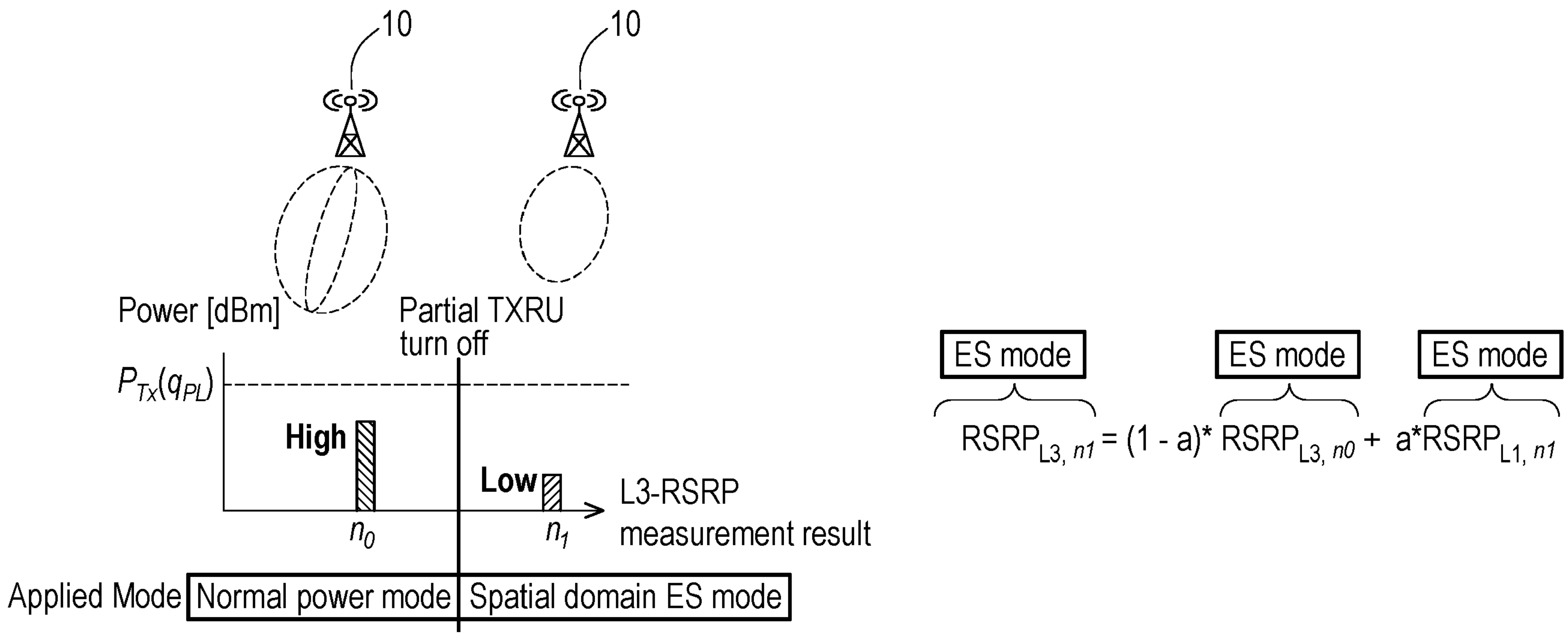
10
10
Power [dBm]
Partial TXRU turn off
$P_{Tx}(q_{PL})$
High
Low
$n_0$
$n_1$
L3-RSRP measurement result
Applied Mode
Normal power mode
Spatial domain ES mode
ES mode
ES mode
ES mode
$RSRP_{L3,n1} = (1 - a)* RSRP_{L3,n0} + a*RSRP_{L1,n1}$

FIG. 14

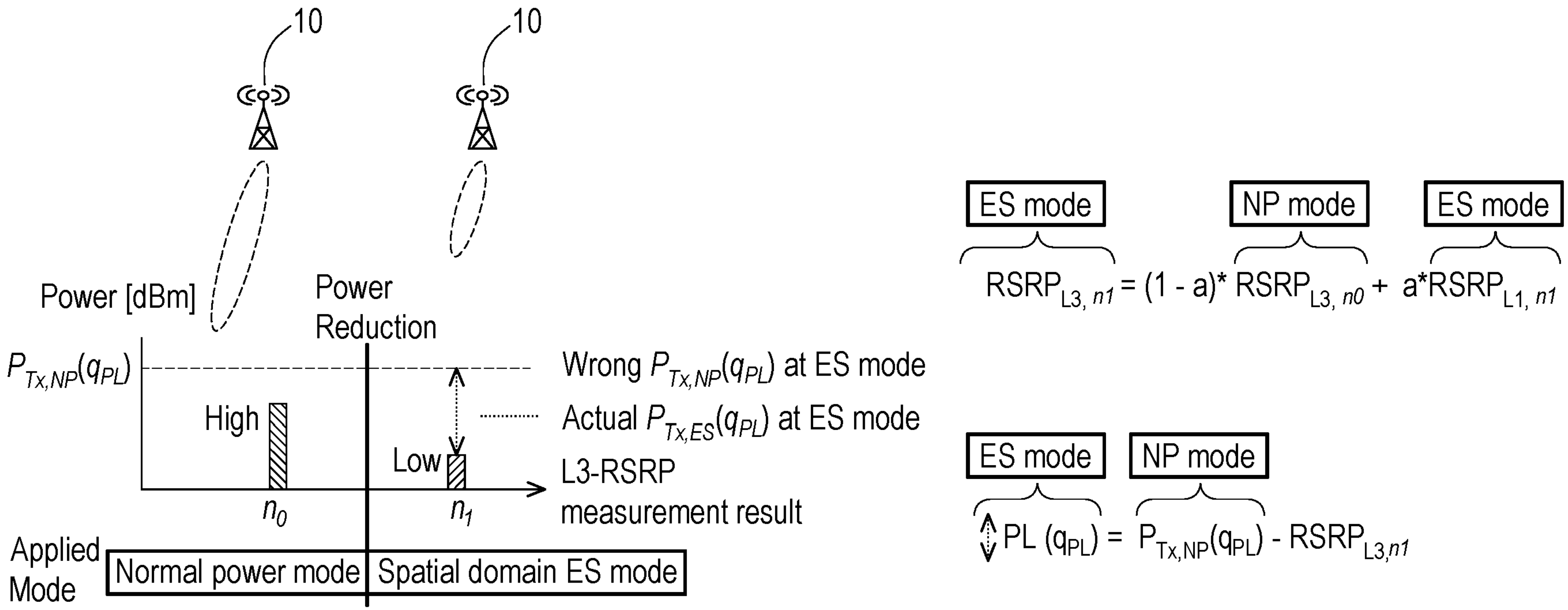
10
10
Power [dBm]
Power
Reduction
$P_{Tx,NP}(q_{PL})$
High
Low
$n_0$
$n_1$
Wrong $P_{Tx,NP}(q_{PL})$ at ES mode
Actual $P_{Tx,ES}(q_{PL})$ at ES mode
L3-RSRP
measurement result
Applied
Mode
Normal power mode
Spatial domain ES mode
ES mode
NP mode
ES mode
$RSRP_{L3,n1} = (1 - a)^{*} RSRP_{L3,n0} + a^{*}RSRP_{L1,n1}$
ES mode
NP mode
$PL(q_{PL}) = P_{Tx,NP}(q_{PL}) - RSRP_{L3,n1}$

FIG. 15

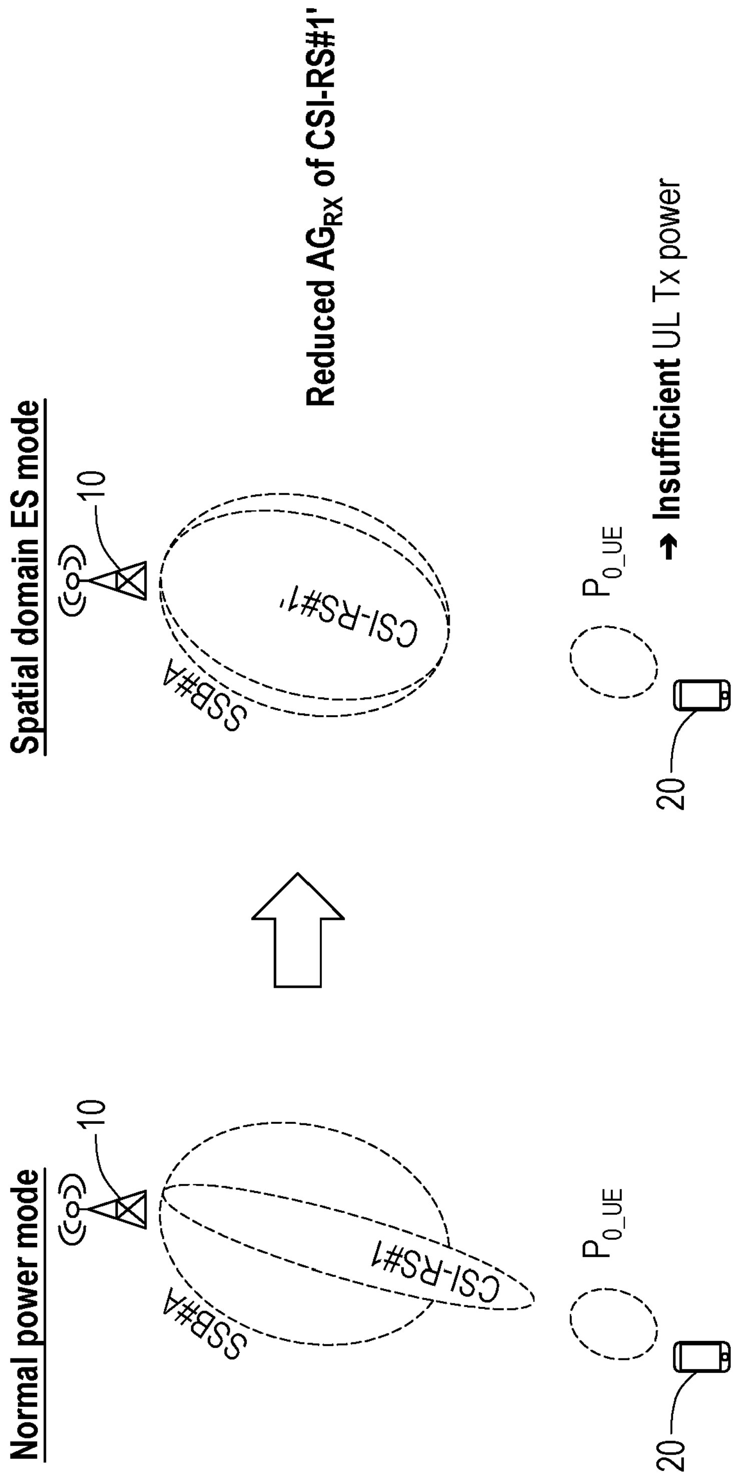

Normal power mode
10
SSB#A
CSI-RS#1
$P_{0_UE}$
20
Spatial domain ES mode
10
SSB#A
CSI-RS#1'
Reduced $AG_{RX}$ of CSI-RS#1'
$P_{0_UE}$
20
→ Insufficient UL Tx power


FIG. 16

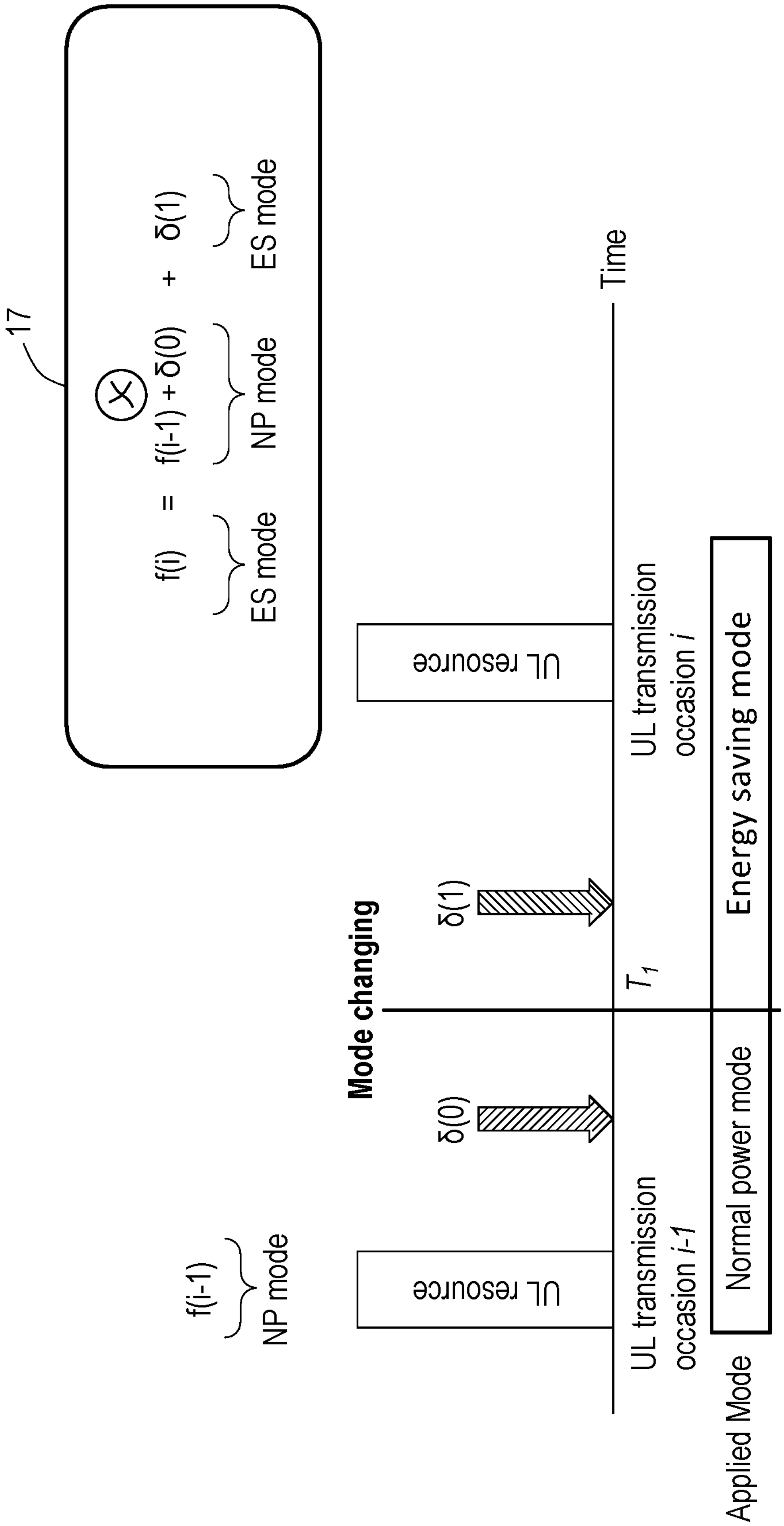
17
f(i) = f(i-1) + δ(0) + δ(1)
ES mode
NP mode
ES mode
f(i-1)
NP mode
UL resource
UL transmission occasion i-1
δ(0)
Mode changing
$T_1$
δ(1)
UL resource
UL transmission occasion i
Time
Applied Mode
Normal power mode
Energy saving mode

FIG. 17

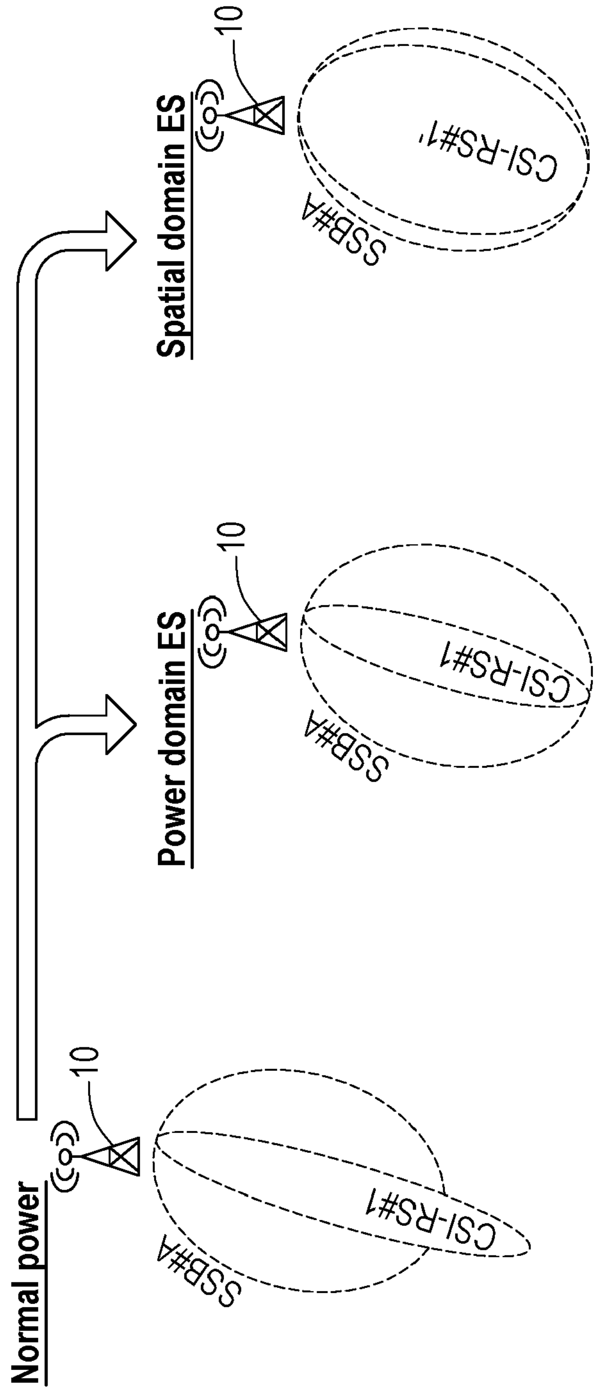
Normal power
10
SSB#A
CSI-RS#1
Power domain ES
10
SSB#A
CSI-RS#1
Spatial domain ES
10
SSB#A
CSI-RS#1'

FIG. 18

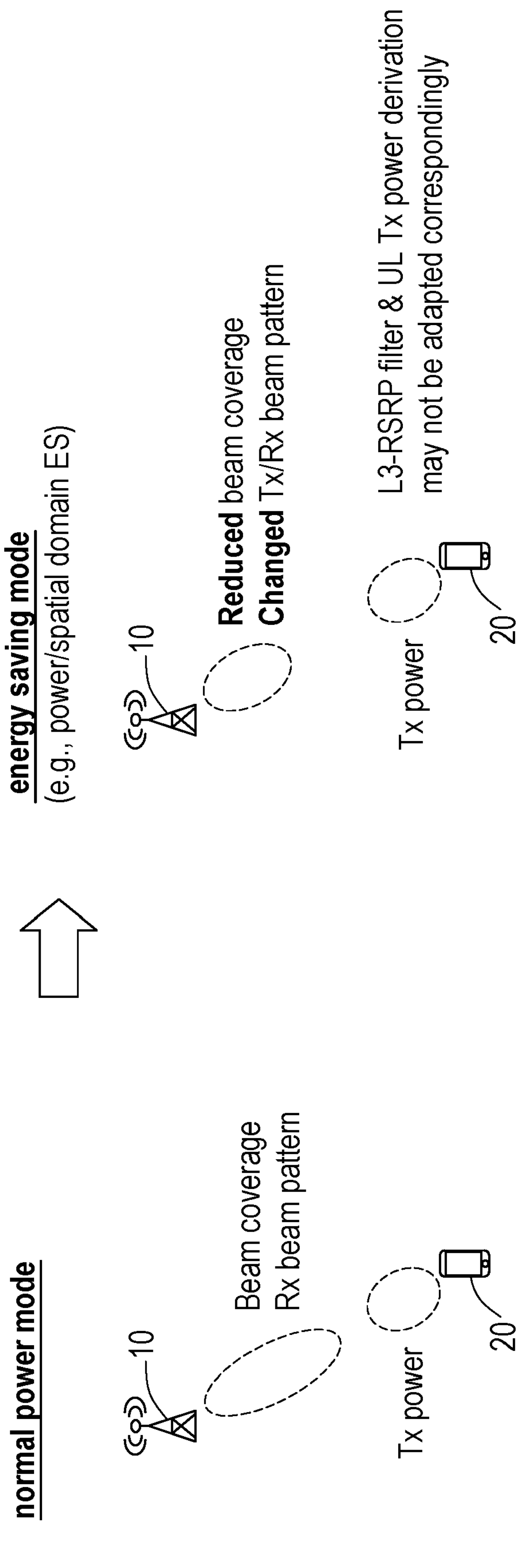
normal power mode
10
Beam coverage
Rx beam pattern
Tx power
20
energy saving mode
(e.g., power/spatial domain ES)
10
Reduced beam coverage
Changed Tx/Rx beam pattern
Tx power
20
L3-RSRP filter & UL Tx power derivation
may not be adapted correspondingly

FIG. 19

$q_{PL}$ = **PL-RS ID#0 (e.g., CSI-RS#1)**

NP mode: RS power #0

ES mode: RS power #1 (or RS power_ES)

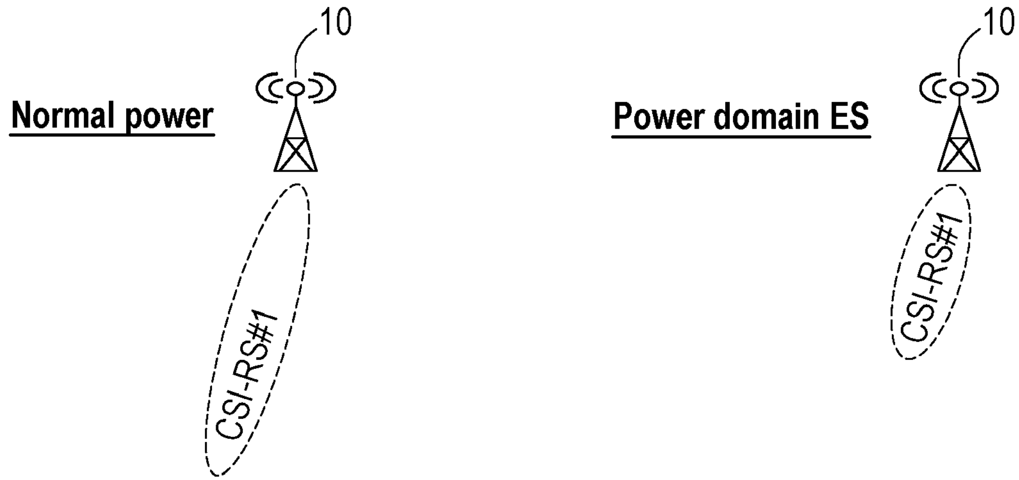


FIG. 20

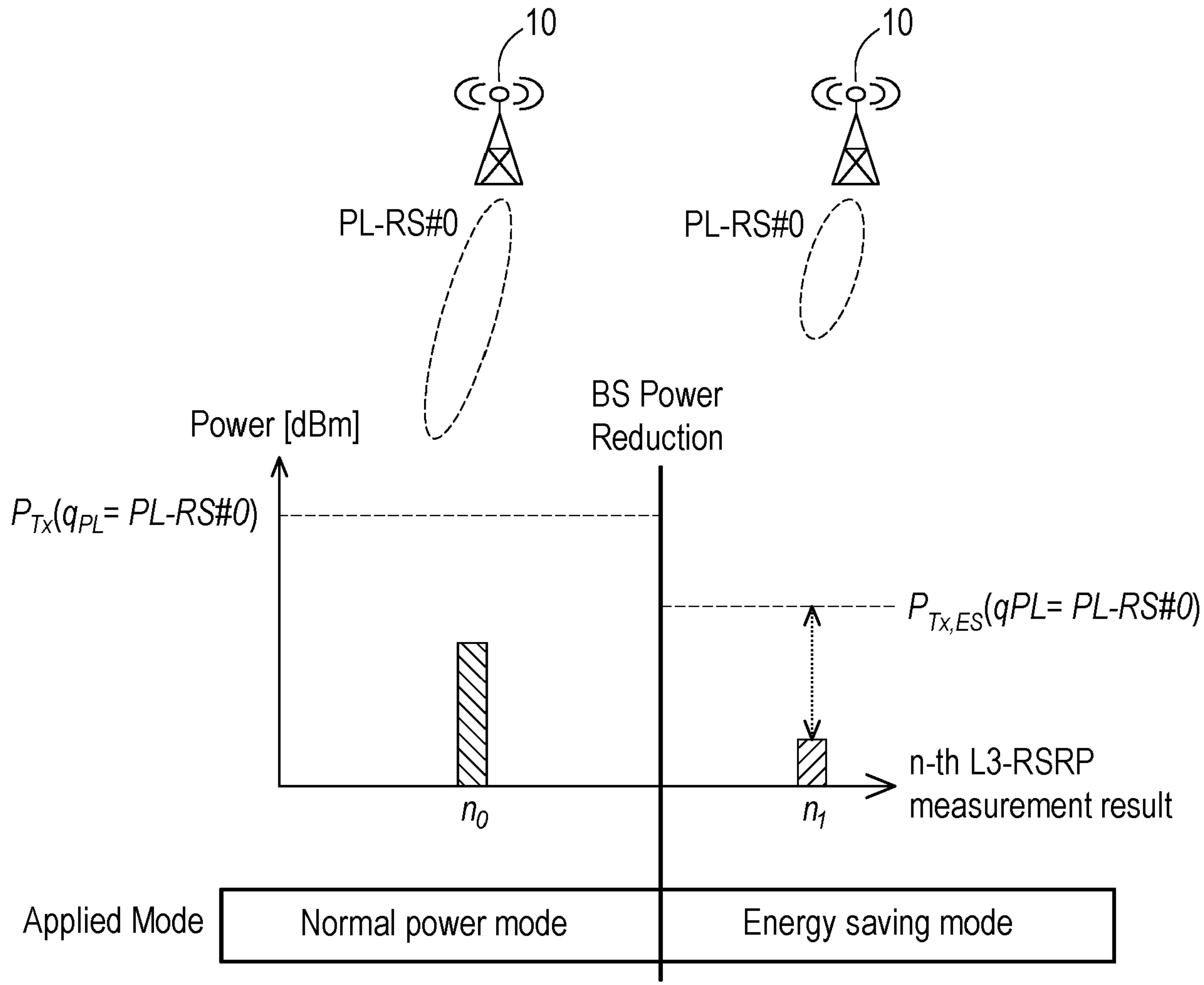
10
10
PL-RS#0
PL-RS#0
Power [dBm]
BS Power
Reduction
$P_{Tx}(q_{PL}= PL\text{-}RS\#0)$
$P_{Tx,ES}(qPL= PL\text{-}RS\#0)$
n-th L3-RSRP
measurement result
$n_0$
$n_1$
Applied Mode
Normal power mode
Energy saving mode

FIG. 21

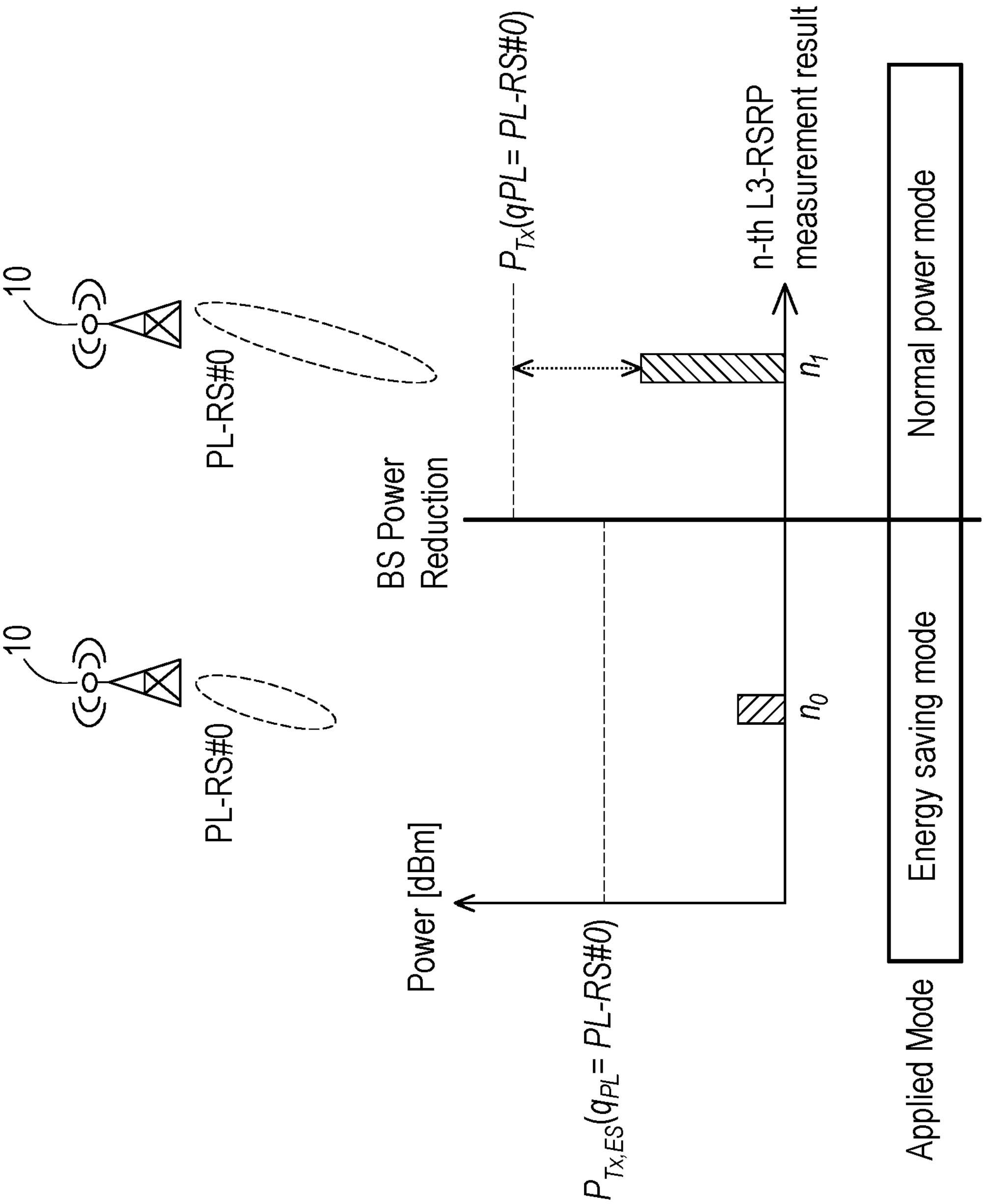
10
PL-RS#0
10
PL-RS#0
Power [dBm]
$P_{Tx,ES}(q_{PL}= PL\text{-}RS\#0)$
BS Power
Reduction
$P_{Tx}(qPL= PL\text{-}RS\#0)$
$n_0$
$n_1$
n-th L3-RSRP
measurement result
Applied Mode
Energy saving mode
Normal power mode

FIG. 22

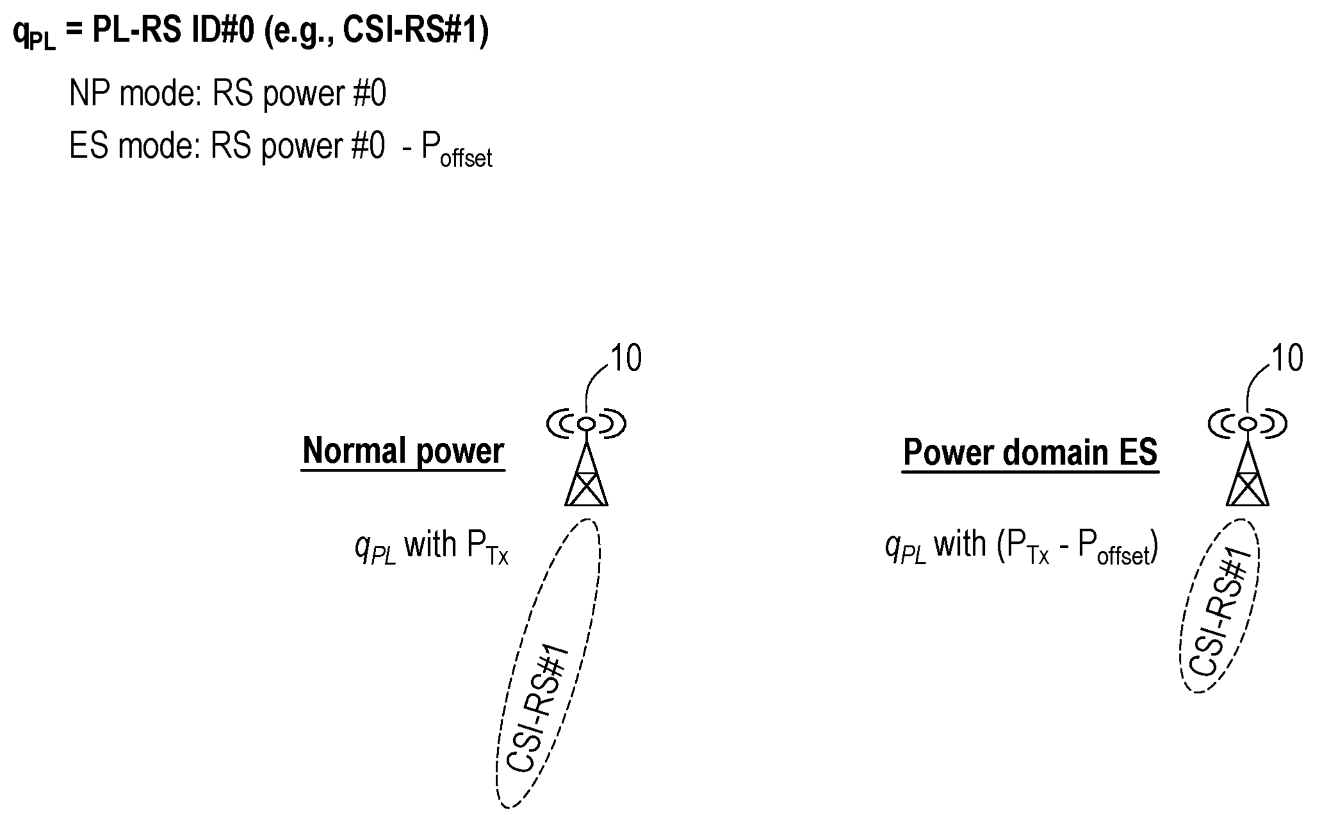
$q_{PL}$ = PL-RS ID#0 (e.g., CSI-RS#1)
NP mode: RS power #0
ES mode: RS power #0 - $P_{offset}$
10
Normal power
$q_{PL}$ with $P_{Tx}$
CSI-RS#1
10
Power domain ES
$q_{PL}$ with ($P_{Tx}$ - $P_{offset}$)
CSI-RS#1

FIG. 23

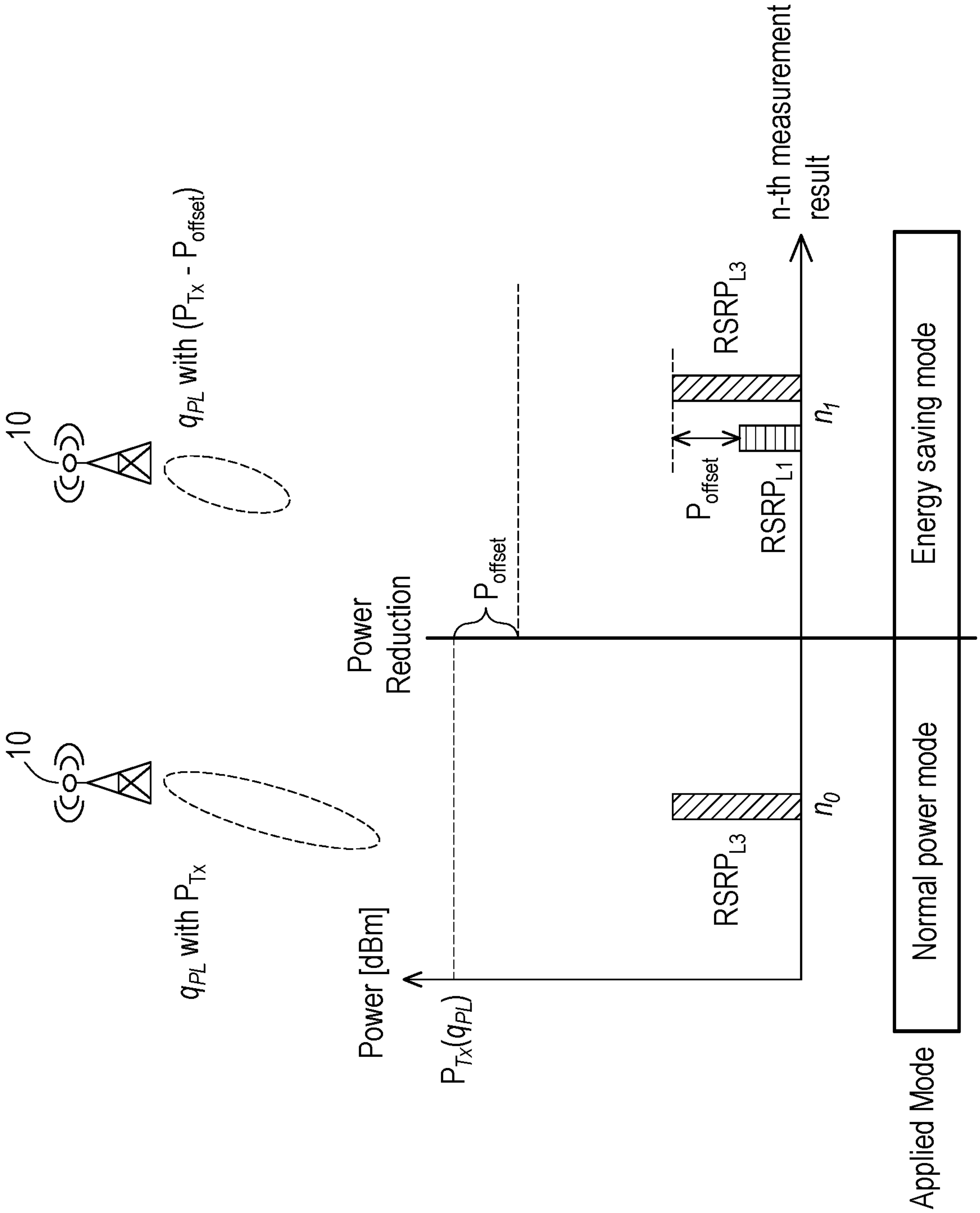
10
$q_{PL}$ with $P_{Tx}$
$q_{PL}$ with ($P_{Tx}$ - $P_{offset}$)
Power [dBm]
$P_{Tx}(q_{PL})$
Power Reduction
$P_{offset}$
$RSRP_{L3}$
$RSRP_{L1}$
$n_0$
$n_1$
n-th measurement result
Applied Mode
Normal power mode
Energy saving mode

FIG. 24

NP Mode: $q_{PL}$ = PL-RS ID#0 (e.g., CSI-RS#A1)

ES Mode: $q_{PL}$ = PL-RS ID_ES (e.g., CSI-RS#A1')

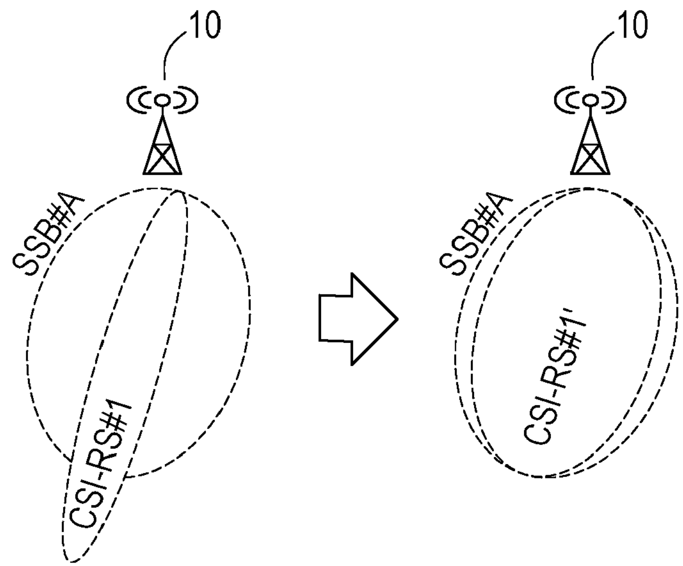


FIG. 25

NP Mode: $q_{PL}$ = PL-RS ID#0 (e.g., CSI-RS#An QCLed with e.g., SSB#A)

ES Mode : $q_{PL}$ = SSB#A (implicitly)

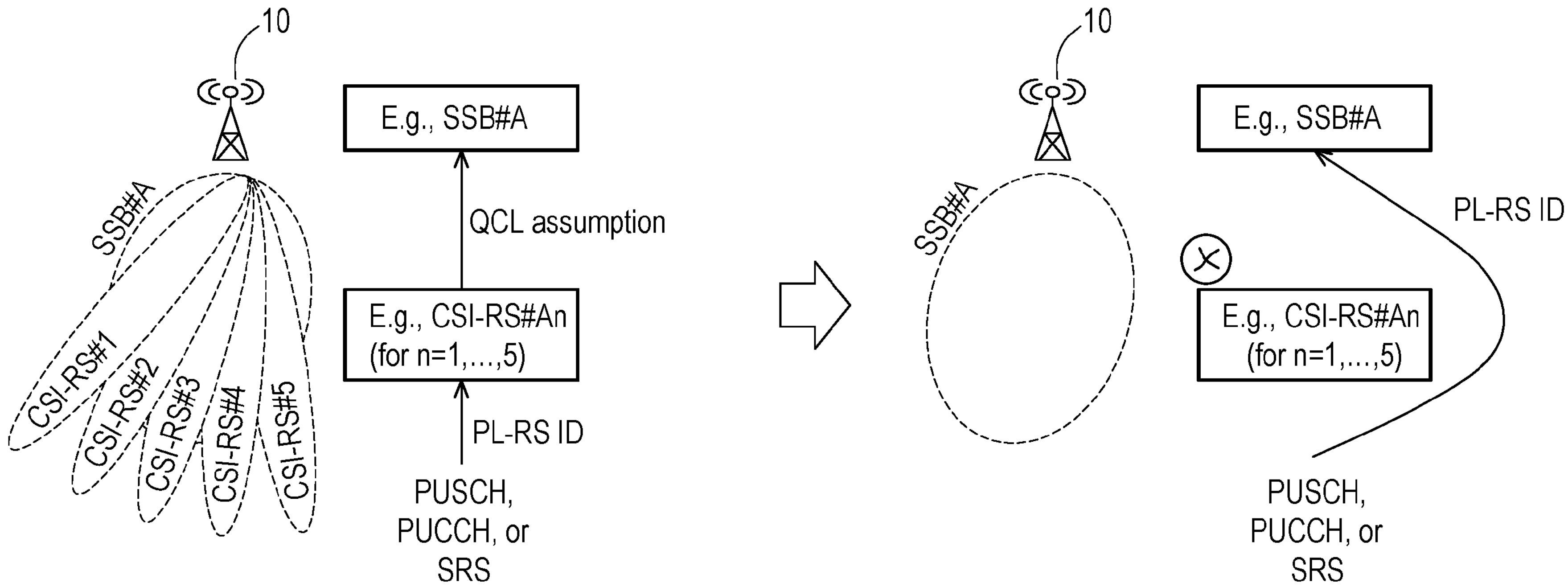


FIG. 26

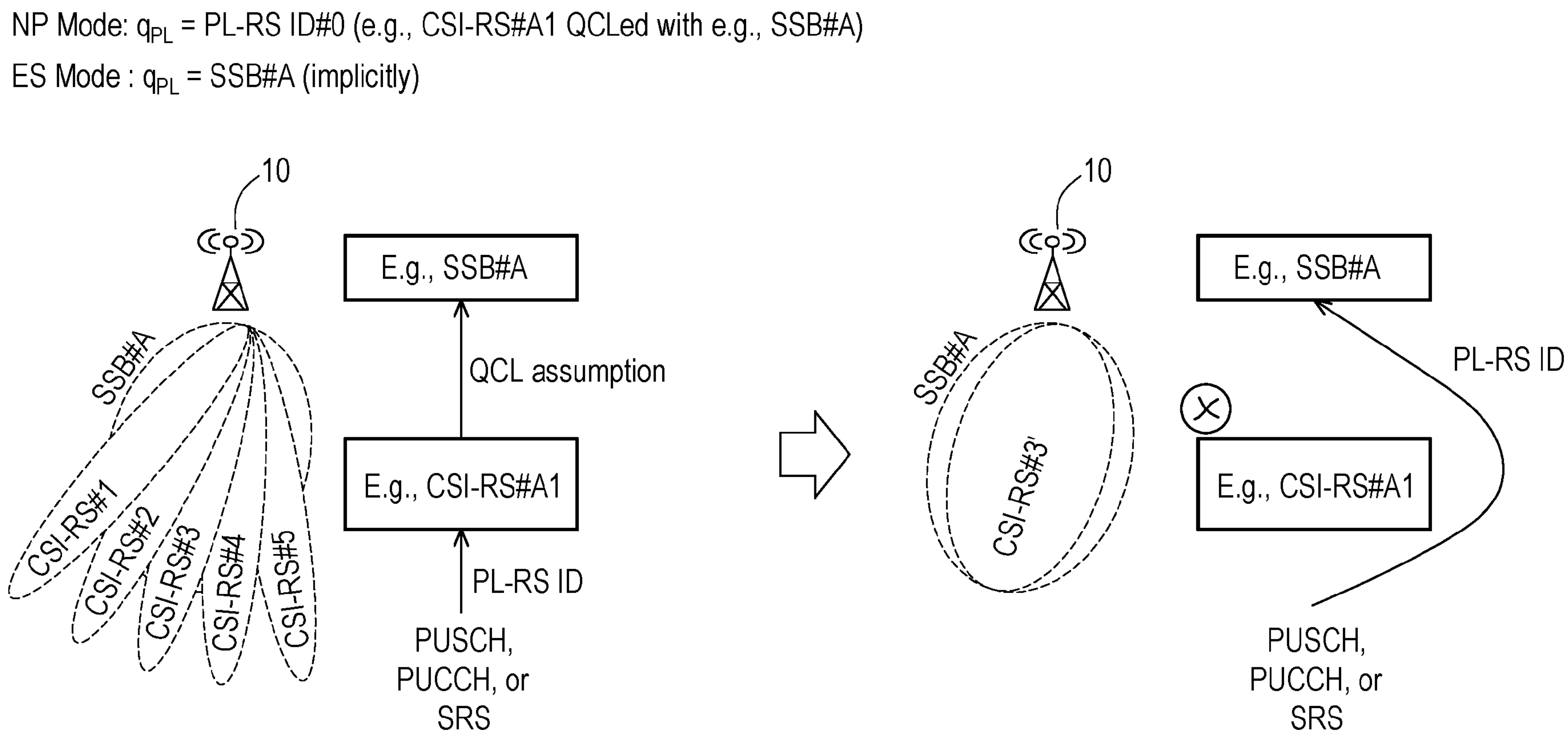
NP Mode: $q_{PL}$ = PL-RS ID#0 (e.g., CSI-RS#A1 QCLed with e.g., SSB#A)
ES Mode : $q_{PL}$ = SSB#A (implicitly)
10
SSB#A
CSI-RS#1
CSI-RS#2
CSI-RS#3
CSI-RS#4
CSI-RS#5
E.g., SSB#A
QCL assumption
E.g., CSI-RS#A1
PL-RS ID
PUSCH, PUCCH, or SRS
10
SSB#A
CSI-RS#3'
E.g., SSB#A
PL-RS ID
E.g., CSI-RS#A1
PUSCH, PUCCH, or SRS

FIG. 27

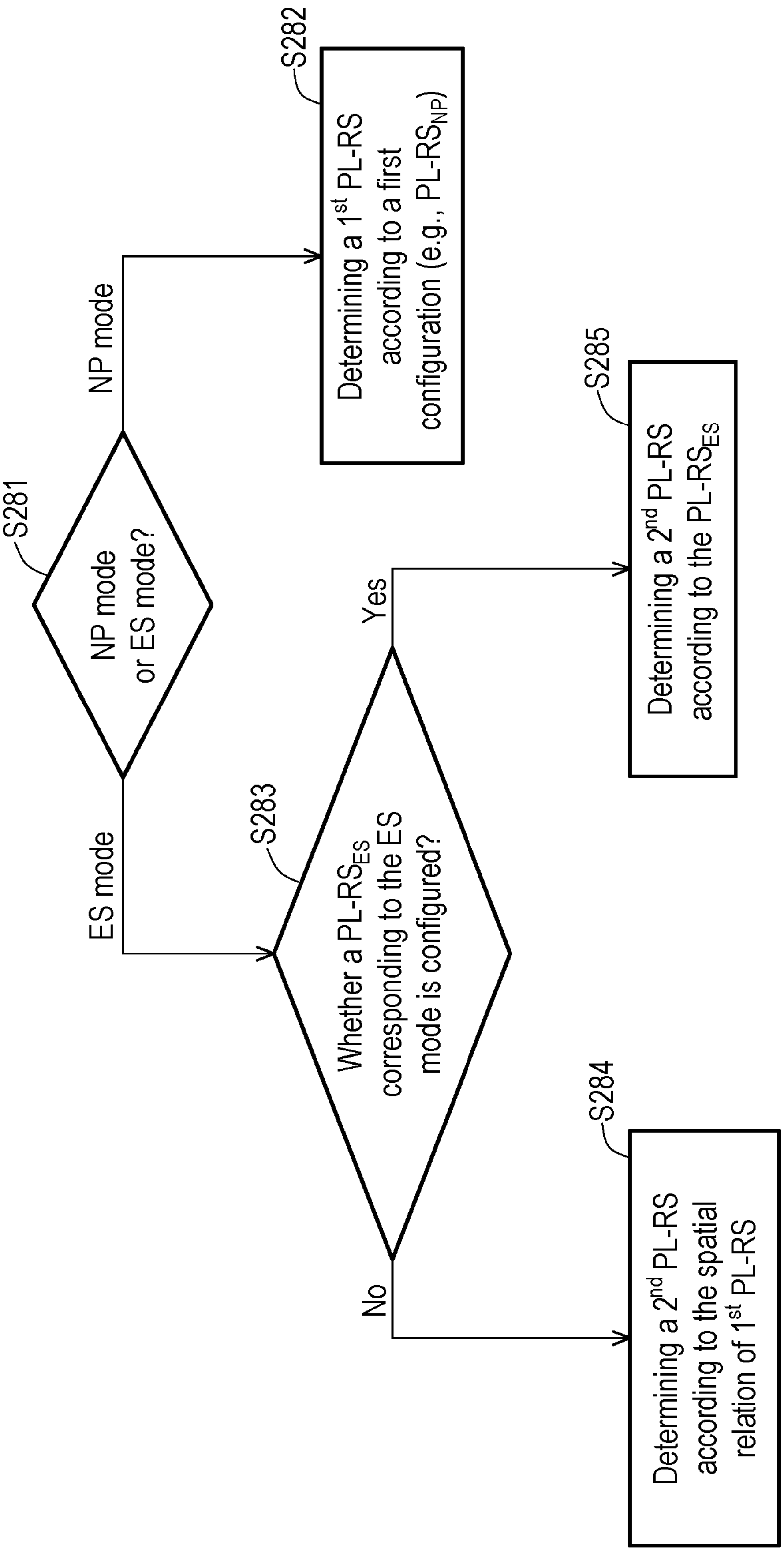
S281
NP mode or ES mode?
NP mode
ES mode
S282
Determining a 1st PL-RS according to a first configuration (e.g., PL-RS_NP)
S283
Whether a PL-RS_ES corresponding to the ES mode is configured?
Yes
No
S284
Determining a 2nd PL-RS according to the spatial relation of 1st PL-RS
S285
Determining a 2nd PL-RS according to the PL-RS_ES

FIG. 28

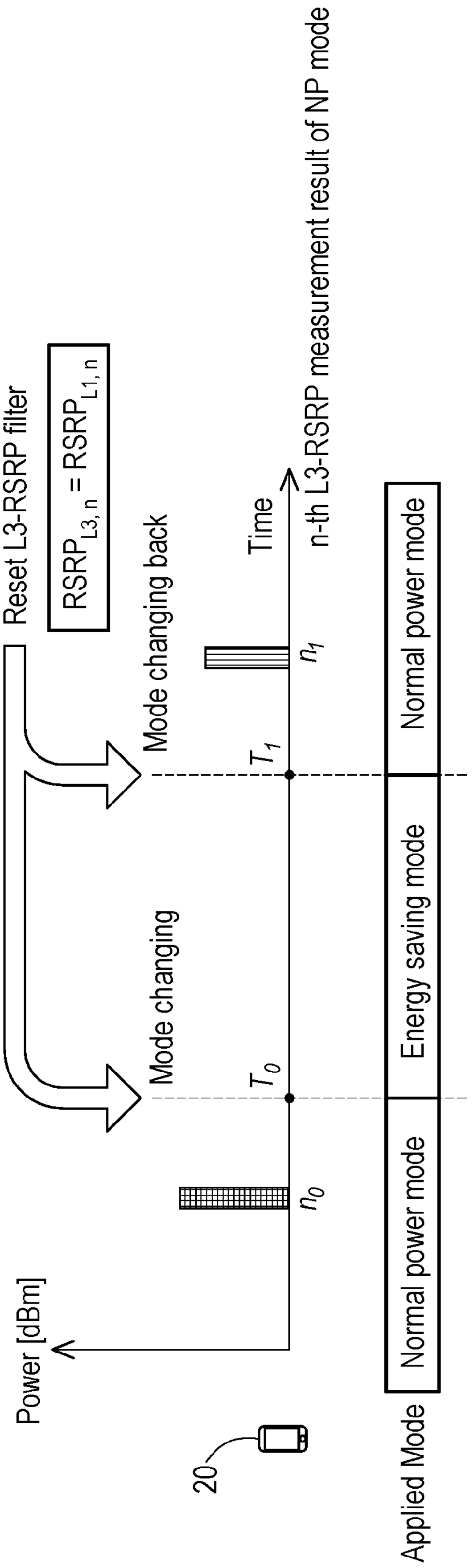

Reset L3-RSRP filter
$RSRP_{L3,n} = RSRP_{L1,n}$
Mode changing
Mode changing back
Power [dBm]
Time
n-th L3-RSRP measurement result of NP mode
$n_0$
$T_0$
$T_1$
$n_1$
20
Applied Mode
Normal power mode
Energy saving mode
Normal power mode


FIG. 29

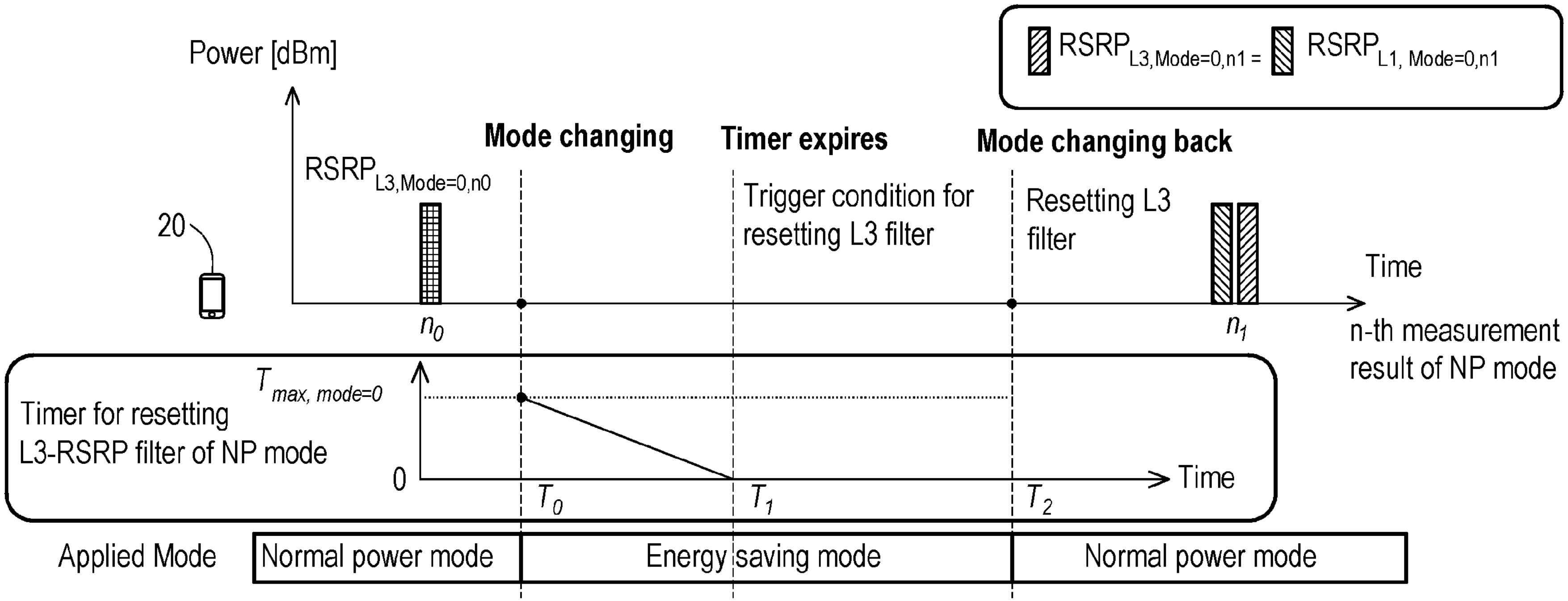
Power [dBm]
RSRP$_{L3,Mode=0,n0}$
20
Mode changing
Timer expires
Mode changing back
Trigger condition for resetting L3 filter
Resetting L3 filter
RSRP$_{L3,Mode=0,n1}$ = RSRP$_{L1, Mode=0,n1}$
Time
$n_0$
$n_1$
n-th measurement result of NP mode
Timer for resetting L3-RSRP filter of NP mode
$T_{max, mode=0}$
0
$T_0$
$T_1$
$T_2$
Time
Applied Mode
Normal power mode
Energy saving mode
Normal power mode

FIG. 30

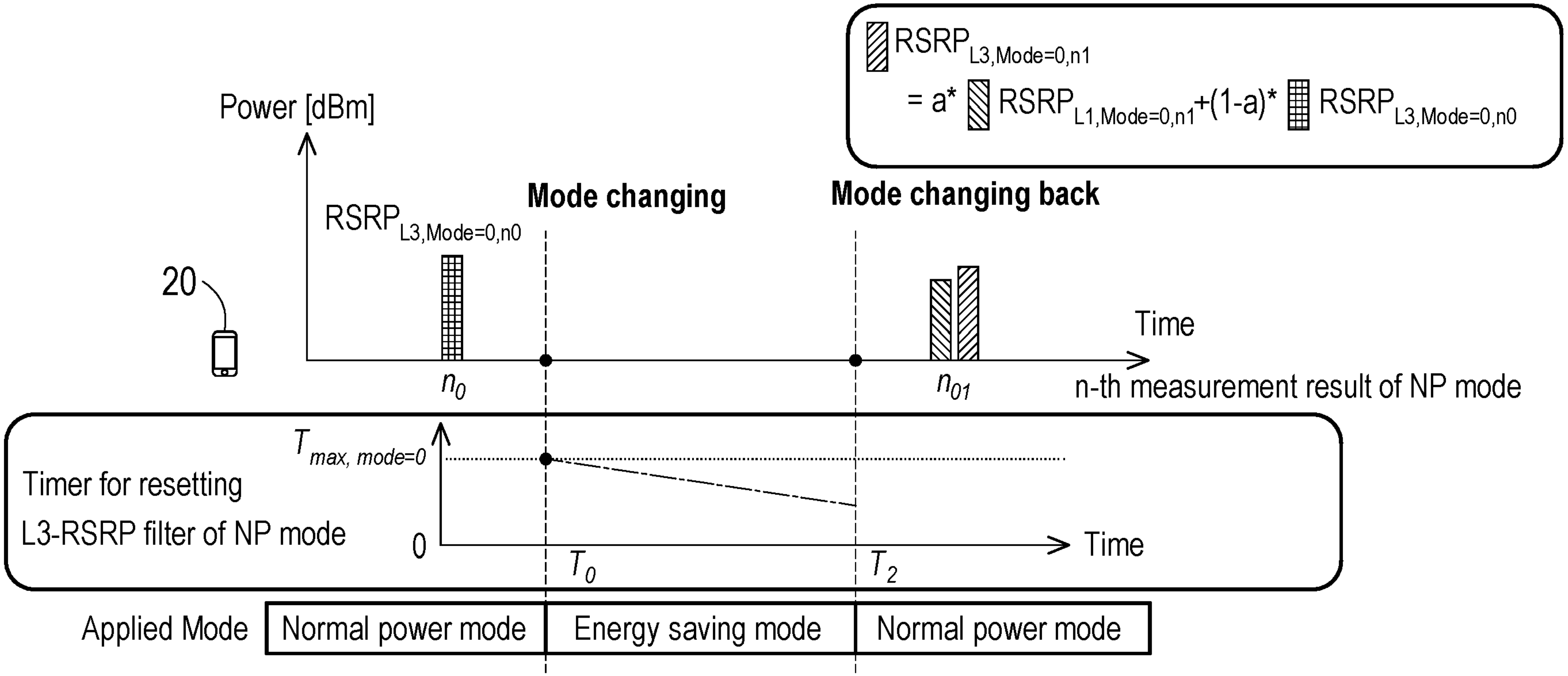
RSRP$_{L3,Mode=0,n1}$
= a* RSRP$_{L1,Mode=0,n1}$+(1-a)* RSRP$_{L3,Mode=0,n0}$
Power [dBm]
RSRP$_{L3,Mode=0,n0}$
Mode changing
Mode changing back
20
Time
$n_0$
$n_{01}$
n-th measurement result of NP mode
$T_{max,\ mode=0}$
Timer for resetting
L3-RSRP filter of NP mode
0
$T_0$
$T_2$
Time
Applied Mode
Normal power mode
Energy saving mode
Normal power mode

FIG. 31

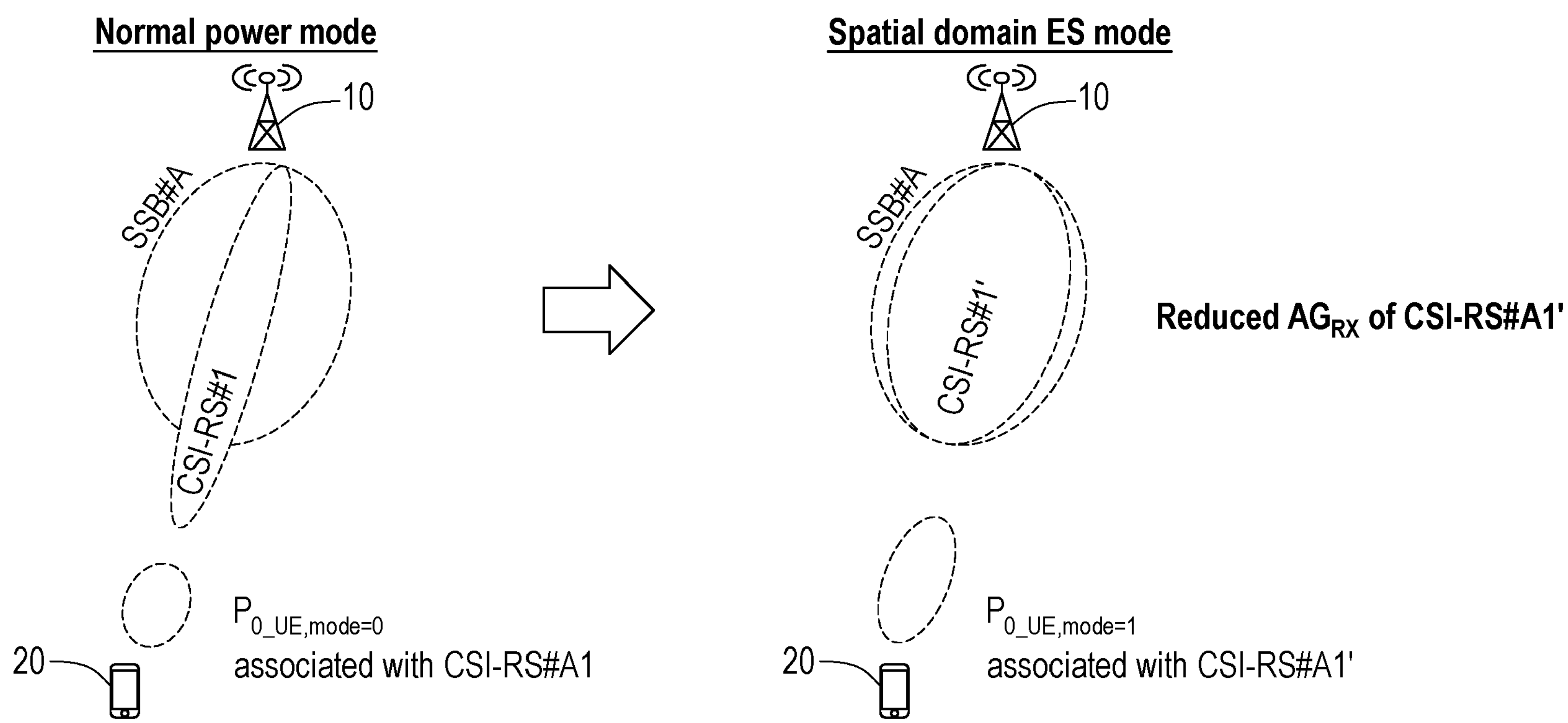
Normal power mode
10
SSB#A
CSI-RS#1
20
$P_{0_UE,mode=0}$
associated with CSI-RS#A1
Spatial domain ES mode
10
SSB#A
CSI-RS#1'
Reduced $AG_{RX}$ of CSI-RS#A1'
20
$P_{0_UE,mode=1}$
associated with CSI-RS#A1'

FIG. 32

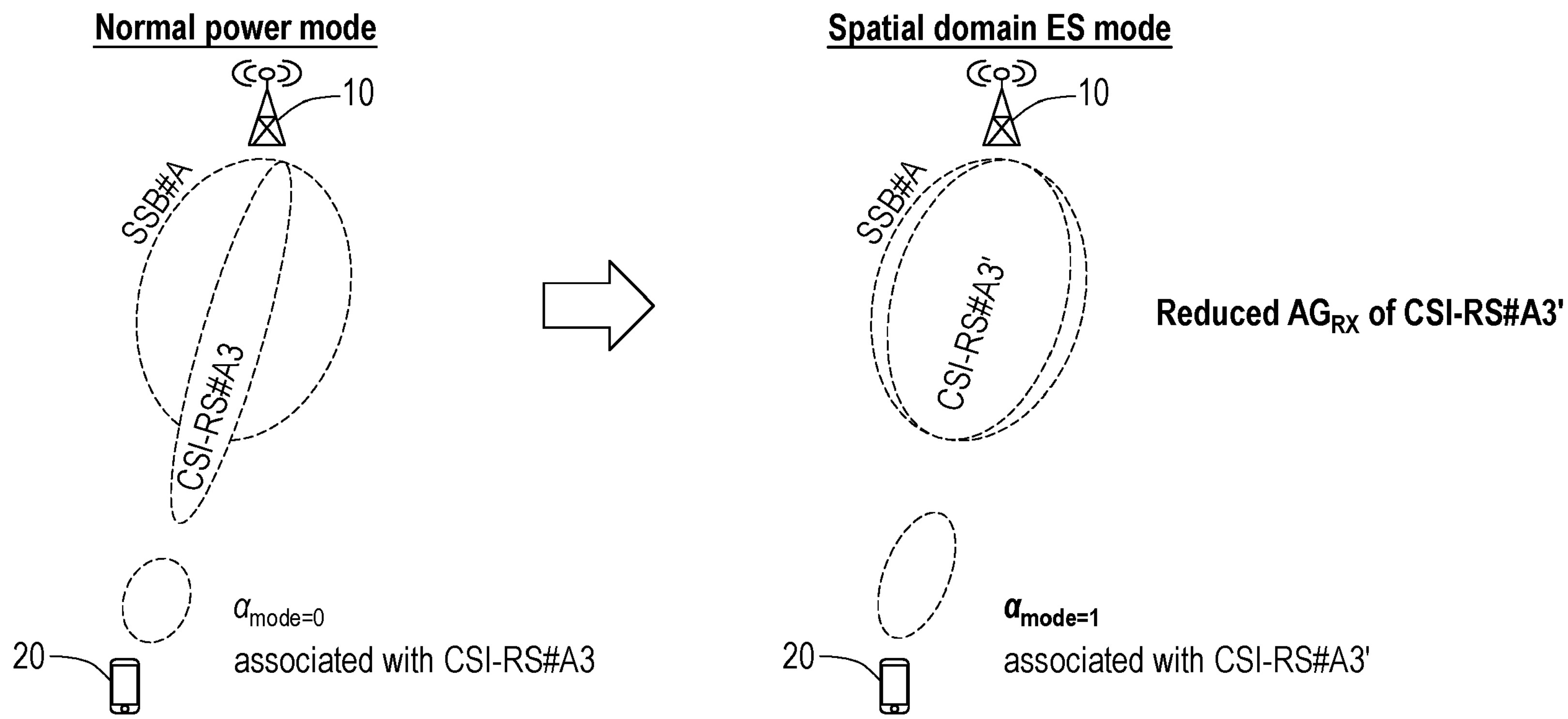
Normal power mode
10
SSB#A
CSI-RS#A3
20
$\alpha_{mode=0}$
associated with CSI-RS#A3
Spatial domain ES mode
10
SSB#A
CSI-RS#A3'
Reduced $AG_{RX}$ of CSI-RS#A3'
20
$\alpha_{mode=1}$
associated with CSI-RS#A3'

FIG. 33

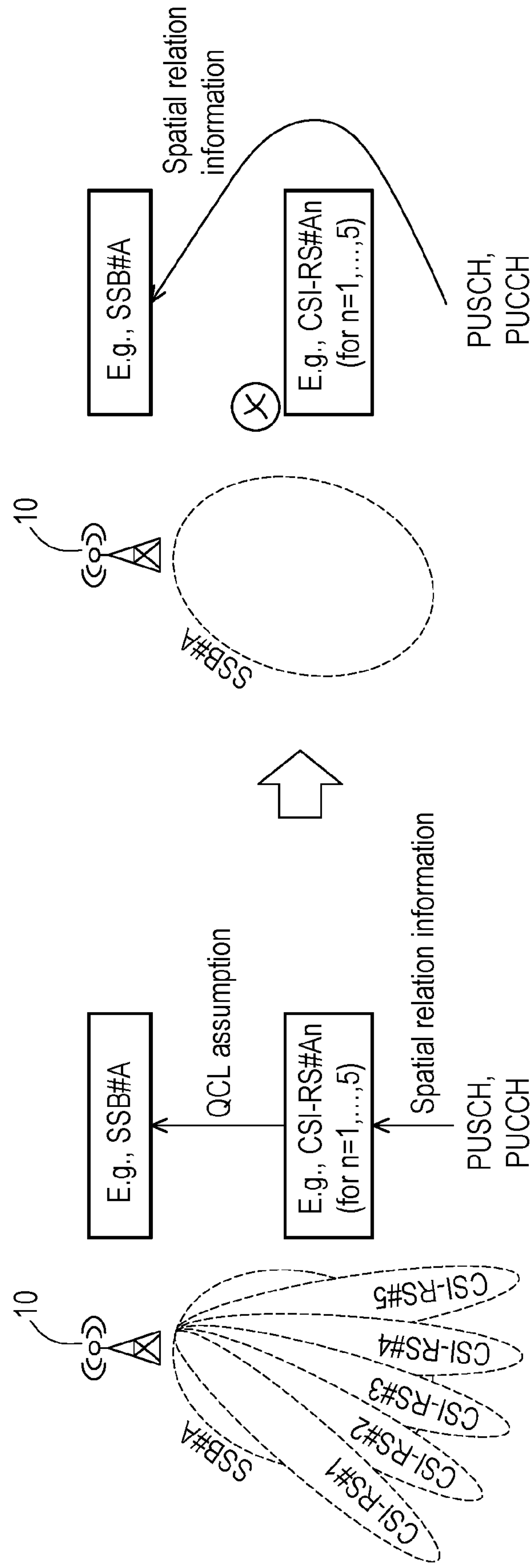
10
SSB#A
CSI-RS#1
CSI-RS#2
CSI-RS#3
CSI-RS#4
CSI-RS#5
E.g., SSB#A
QCL assumption
E.g., CSI-RS#An (for n=1,...,5)
Spatial relation information
PUSCH, PUCCH
10
SSB#A
E.g., SSB#A
Spatial relation information
E.g., CSI-RS#An (for n=1,...,5)
PUSCH, PUCCH

FIG. 34

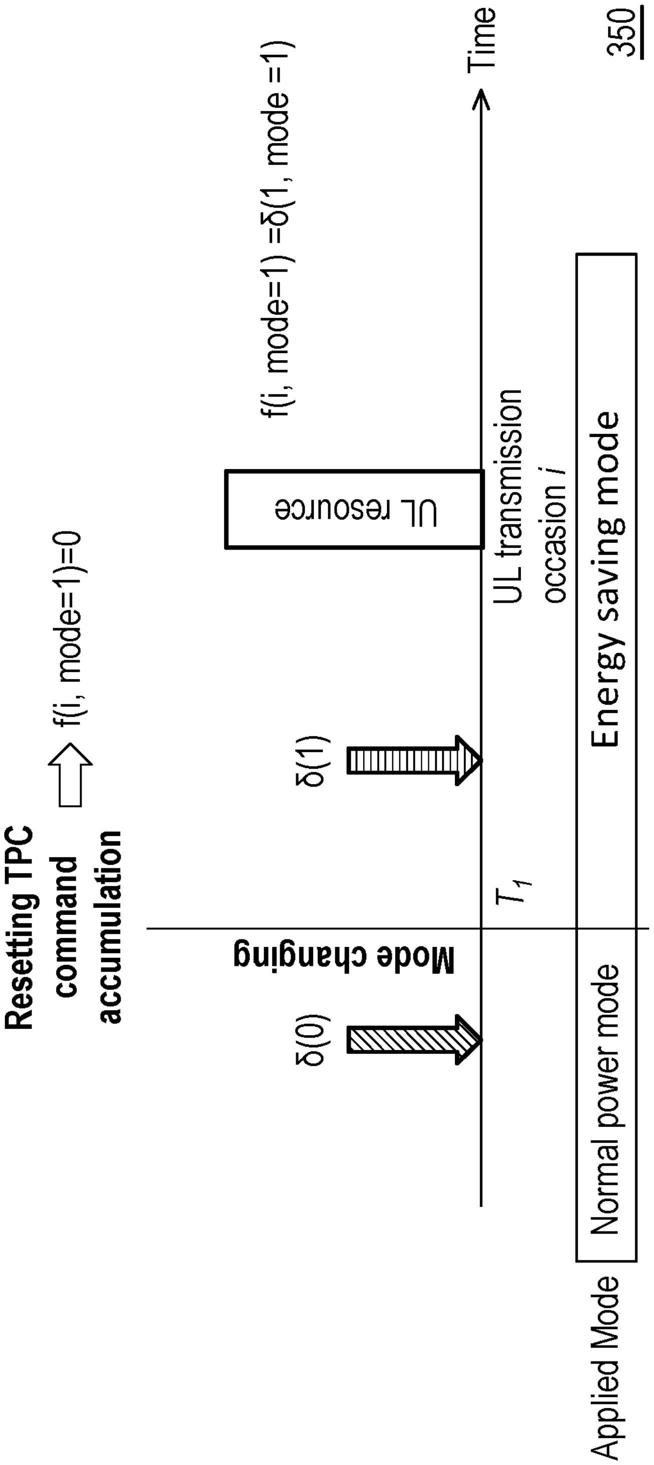
Resetting TPC command accumulation
f(i, mode=1)=0
δ(0)
Mode changing
δ(1)
T1
UL resource
UL transmission occasion i
f(i, mode=1) =δ(1, mode =1)
Time
Applied Mode
Normal power mode
Energy saving mode
350

FIG. 35

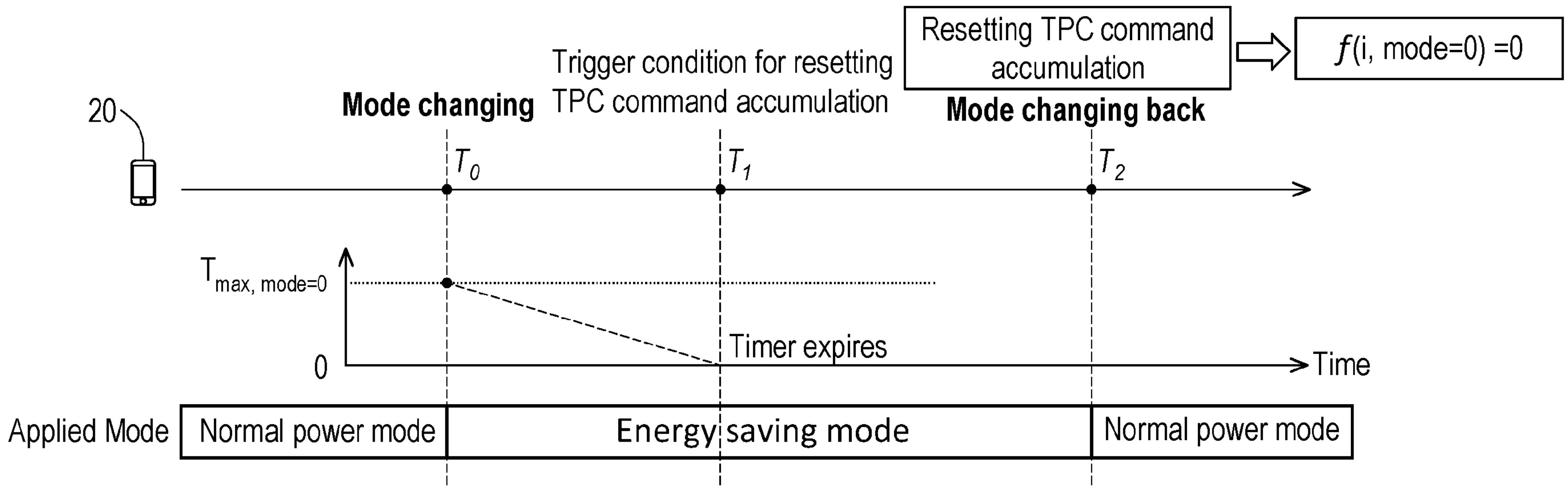
20
Mode changing
Trigger condition for resetting TPC command accumulation
Resetting TPC command accumulation
f(i, mode=0) =0
Mode changing back
T0
T1
T2
Tmax, mode=0
0
Timer expires
Time
Applied Mode
Normal power mode
Energy saving mode
Normal power mode

FIG. 36

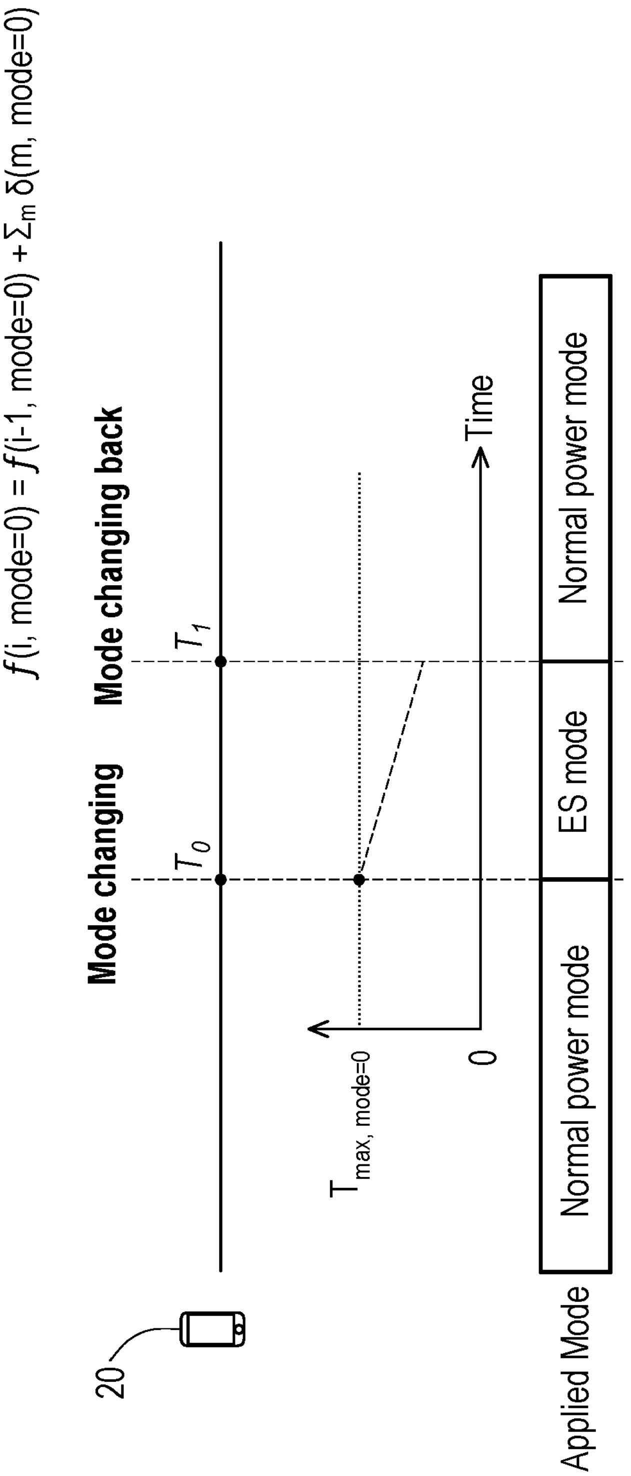

$f(i, mode=0) = f(i-1, mode=0) + \Sigma_m \delta(m, mode=0)$
Mode changing
Mode changing back
$T_0$
$T_1$
20
$T_{max, mode=0}$
0
Time
Applied Mode
Normal power mode
ES mode
Normal power mode


FIG. 37

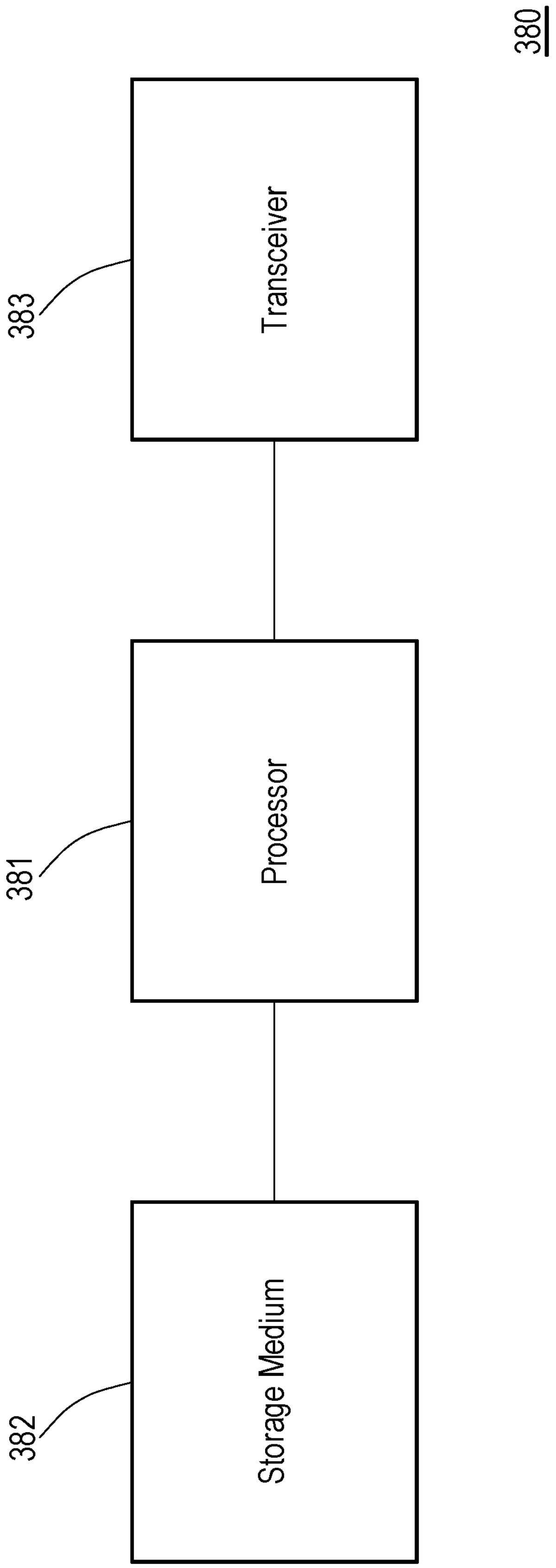


FIG. 38

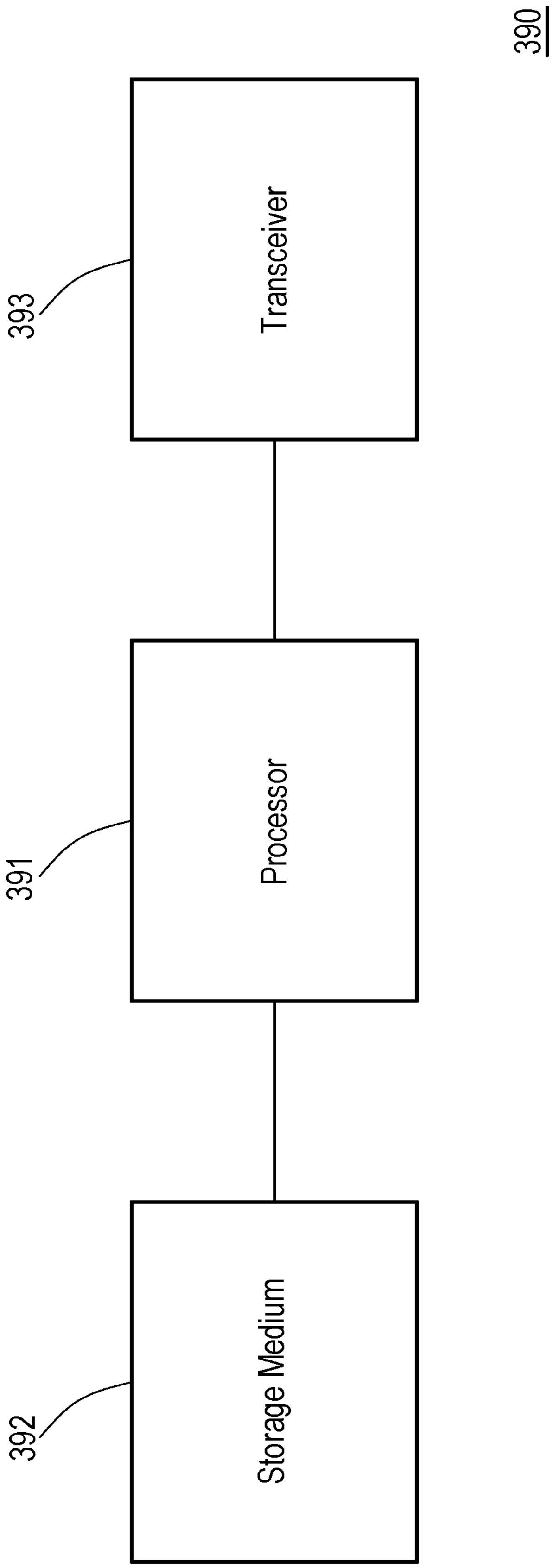


FIG. 39

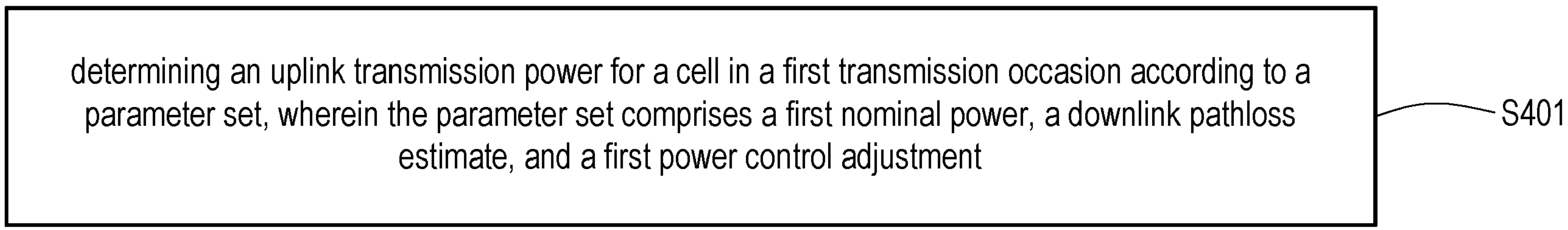
determining an uplink transmission power for a cell in a first transmission occasion according to a parameter set, wherein the parameter set comprises a first nominal power, a downlink pathloss estimate, and a first power control adjustment
S401

FIG. 40

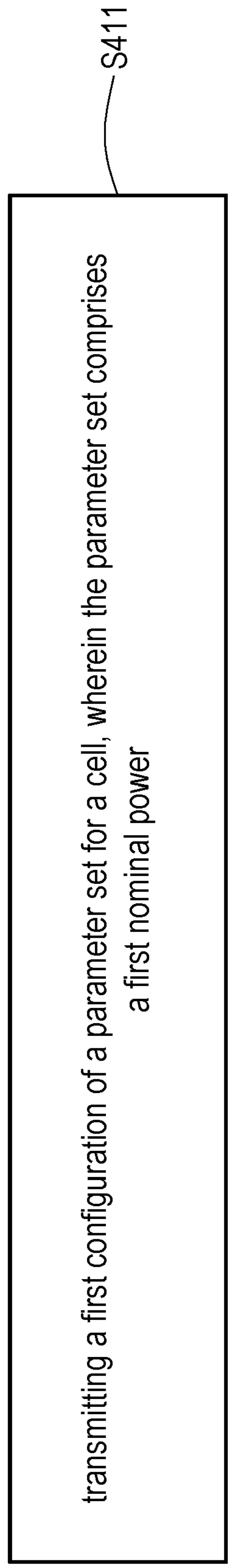
S411
transmitting a first configuration of a parameter set for a cell, wherein the parameter set comprises a first nominal power

FIG. 41